# EUROPEAN PATENT APPLICATION

(11) **EP 3 450 273 A1**
(43) Date of publication of application: **06.03.2019**
(21) Application number: 18191177.7
(22) Date of filing: 28.08.2018
(51) Int. Cl.: B60T 13/74, F16D 55/226, F16D 65/18, F16D 65/56

(54) **BRAKE ASSEMBLY WITH MOTOR BRAKE**

(30) Priority: 29.08.2017 US 201715689614
(71) Applicant: Akebono Brake Industry Co., Ltd., Tokyo 103-8534 (JP)
(72) Inventor: Thomas, Carla, Royal Oak, MI 48067 (US)
(74) Representative: Kutzenberger Wolff & Partner

(57) **Abstract**

The present disclosure relates to a brake assembly having: a) a motor; b) a reduction gear system; c) a motor brake having: (i) a toothed wheel; (ii) an electromagnet; (iii) a pawl; (iv) a biasing means; d) a rotary to linear actuator in communication with the reduction gear system that drives one or more brake pads; wherein the pawl is monostable, so that the pawl is engaged with the toothed wheel when the motor brake is in an engaged position to prevent rotation of the toothed wheel and the motor when the electromagnet is not energized, and when the motor brake is in a disengaged position, the pawl moves away from the toothed wheel when the electromagnet is energized so the toothed wheel may rotate freely with the motor; and wherein the biasing means urges the pawl into engagement with the toothed wheel.

## Description

### FIELD

The present teachings relate to a motor brake. The motor brake may be particularly advantageous in preventing back drive of a motor through the aid of an electromagnet. Preferably, the motor brake prevents movement within a braking system during a brake apply so that a torque generated by the braking system is maintained.

### BACKGROUND

Generally actuators, such as rotary motion to linear actuators, include a spindle or drive screw within a nut. In brake assemblies, such actuators convert a rotational motion to a linear motion to apply a brake force, release a brake force, or both. Torque is typically generated by a motor and the torque is transferred by one or more gears to the actuator. When torque generated by the motor is removed, such as when the motor is powered off, there is strain energy in the system. The strain energy applies a torque, such as a back-drive torque. The back-drive torque results in the actuator back-driving and being unable to sustain a brake force.

Attempts have been made to incorporate a "self-locking" feature to ensure that the force (i.e., torque) applied to an actuator is maintained after the motor applied current is turned off. The self-locking function is typically incorporated in the system by using an element which cannot be back-driven, such as a worm type reduction gear or a short pitch drive screw. However, these elements, which cannot be back-driven, incorporate friction levels which are incompatible with high efficiency so that either speed is sacrificed or a larger motor is used to achieve a desired result.

It would be attractive to have a motor brake able to prevent back-driving, so as to allow a brake force to be sustained without having to continuously apply torque, such as by a motor. What is needed is a motor brake compatible with a braking system in which the system allows use of high efficiency mechanisms for speed reduction and rotary to linear conversion stages. What is needed is a system with reduced size and cost of components, which can be achieved by means of higher efficiency.

### SUMMARY

The present disclosure relates to a brake assembly comprising: a) a motor; b) a reduction gear system having one or more stages in communication with the motor; c) a motor brake having: (i) a toothed wheel in rotational communication with the motor; (ii) an electromagnet; (iii) a pawl; (iv) a biasing means; d) a rotary to linear actuator in communication with the reduction gear system that drives one or more brake pads; wherein the pawl is monostable, so that the pawl is engaged with the toothed wheel when the motor brake is in an engaged position to prevent rotation of the toothed wheel and the motor when the electromagnet is not energized, and when the motor brake is in a disengaged position, the pawl moves away from the toothed wheel when the electromagnet is energized so the toothed wheel may rotate freely with the motor; and wherein the biasing means urges the pawl into engagement with the toothed wheel so that the motor brake is positioned from the disengaged position to engaged position.

The present disclosure relates to a brake assembly comprising: a) a motor; b) a drive shaft in rotational communication with the motor so that the motor drives the drive shaft in one or more driving directions about a rotational axis; c) a reduction gear system having one or more stages in communication with the motor; d) a motor brake having: (i) a toothed wheel in rotational communication with the drive shaft; (ii) an electromagnet including a coil wrapped about a bobbin which is seated within a casing; (iii) a pawl; (iv) a biasing means which is a spring washer between the pawl and the bobbin; a rotary to linear actuator in communication with the reduction gear system that drives one or more brake pads; wherein the toothed wheel, the pawl, the spring washer, the bobbin, and the casing are co-axial about the rotational axis; wherein the pawl is monostable, so that the pawl is engaged with the toothed wheel in an engaged position to prevent rotation of the toothed wheel and the motor when the electromagnet is not energized, and the pawl is in a disengaged position and deflected away from the toothed wheel when the electromagnet is energized so the toothed wheel may rotate freely with the motor; wherein the spring washer urges the pawl into engagement with the toothed wheel to move from the disengaged position to engaged position; and wherein the motor brake prevents back drive of the drive shaft when the motor does not generate the one or more driving directions.

The present disclosure further relates to assembling the motor brake of the disclosure to a brake assembly, the method comprising: a) supporting a drive shaft of the brake assembly axially to prevent axial and/or rotational movement of the drive shaft; b) forming a motor brake in an engaged position by: (i) angularly aligning a toothed wheel with a pawl so that one or more teeth of the pawl mesh with one or more surface teeth of the toothed wheel; (ii) angularly aligning the pawl with an electromagnet so that one or more projections of the pawl abut with a surface of a casing so that a surface of the pawl is distanced from the casing to form an electromagnetic air gap; c) installing the motor brake onto the drive shaft so that a central opening of the toothed wheel is press-fitted over the drive shaft so the toothed wheel is in rotational communication with the drive shaft; wherein the electromagnet includes a coil wrapped about a bobbin disposed within the casing; wherein the casing includes one or more pawl slots which are able to receive the one or more projections to restrict rotational movement of the pawls; and wherein the motor brake is able to move from an engaged position to a disengaged position when the electromagnet creates a magnetic field so that the pawl does not mesh with the toothed wheel, the one or more projections are received within the one or more pawl slots, and the electromagnetic air gap is located between the toothed wheel and the pawl.

The brake assembly of the present disclosure is able to prevent back-driving by means of a motor brake. The brake assembly of the disclosure is able to retain torque applied to an actuator after torque applied by a motor is removed. The brake assembly of the disclosure may be included or part of an electric parking brake assembly. The brake assembly of the disclosure provides for a higher efficiency mechanism as compared to worm type reduction gears, short pitch drive screws, and other known mechanisms for preventing back-driving. The brake assembly allows for lower cost components and can be reduced in size as compared to other systems for speed reduction and rotary to linear conversion.

### BRIEF DESCRIPTION OF DRAWINGS

FIG. 1 is a planar view of a brake assembly having a motor brake.
FIG. 2 illustrates a cross-section of a brake assembly along cut-line A-A of FIG. 1.
FIG. 3 is a perspective view of a motor gear unit assembled with a motor brake.
FIG. 4 is a perspective view of a housing unit.
FIG. 5A illustrates a geared face of a toothed wheel of a motor brake.
FIG. 5B illustrates a planar face of a toothed wheel of a motor brake.
FIG. 6A illustrates a spring-facing surface of a pawl of a motor brake.
FIG. 6B illustrates a wheel-facing surface of a pawl of a motor brake.
FIG. 7A illustrates a bobbin-facing surface of a spring washer of a motor brake.
FIG. 7B illustrates a pawl-facing surface of a spring washer of a motor brake.
FIG. 8A shows an anti-rotation flange of a bobbin of a motor brake.
FIG. 8B shows a spring-engaging flange of a bobbin of a motor brake.
FIG. 9A illustrates an exterior of a casing of a motor brake.
FIG. 9B illustrates an interior of a casing of a motor brake.
FIG. 10A is a perspective view of a motor brake.
FIG. 10B is an exploded view of the motor brake of FIG. 10A.
FIG. 11A is a perspective view of a motor brake in a disengaged position.
FIG. 11B is a side view of the motor brake of FIG. 11A in a disengaged position.
FIG. 11C illustrates a cross-section of a motor brake in a disengaged position along cut-line B-B as shown in FIG. 11A.
FIG. 12A is a perspective view of a motor brake in an engaged position.
FIG. 12B is a side view of the motor brake of FIG. 12A in an engaged position.
FIG. 12C illustrates a cross-section of a motor brake in an engaged position along cut-line B-B as shown in FIG. 12A.
FIG. 12D illustrates a cross-section of a motor brake without a casing in an engaged position along cut-line C-C as shown in FIG. 12B.
FIG. 13 is a perspective view of a motor gear unit assembled with a motor brake.
FIG. 14 is a perspective view of a housing unit.
FIG. 15 is a planar view of a motor brake in a disengaged position.
FIG. 16A is a planar view of a motor brake in an engaged position.
FIG. 16B is a perspective view of a motor brake in an engaged position.
FIG. 17 is a planar view of a motor brake in a disengaged position.
FIG. 18 is a planar view of a motor brake in an engaged position.

### DETAILED DESCRIPTION

The explanations and illustrations presented herein are intended to acquaint others skilled in the art with the present teachings, its principles, and its practical application. The specific embodiments of the present teachings as set forth are not intended as being exhaustive or limiting of the present teachings. The scope of the present teachings should be determined with reference to the appended claims, along with the full scope of equivalents to which such claims are entitled. The disclosures of all articles and references, including patent applications and publications, are incorporated by reference for all purposes. Other combinations are also possible as will be gleaned from the following claims, which are also hereby incorporated by reference into this written description.

The present teachings are predicated upon providing a brake assembly. A brake assembly may also refer to a parking brake assembly. The present teachings may be used with a brake assembly in any vehicle. For example, the teachings herein can be used in any size car, truck, bus, airplane, all-terrain vehicle, etc. The present teachings may also be used in non-vehicular applications. For example, the teachings herein may be applied to brake assemblies used in various machines, such as a lathe, a winder for paper products or cloth, amusement park rides, wind turbines, or the like. A brake in the brake assembly may include an electric brake, a hydraulic brake, an electromechanical brake, an electro-hydraulic brake, a solenoid brake, or a combination thereof.

The brake assembly may be any device, system, and/or assembly used to create and/or sustain a brake force. The brake force may be any force that slows and/or prevents movement or rotation of a rotor; decelerates and/or prevents movement of a vehicle; or both. The brake force may be created by converting kinetic energy of a vehicle into thermal energy. The brake force can be created during a standard brake apply, a parking brake apply, or both. A standard brake apply may function to slow and/or stop a vehicle. A parking brake apply may function to park or prevent movement of a stopped or parked vehicle. Exemplary brake assemblies include opposing brake assemblies (i.e., fixed caliper brake assemblies), floating brake assemblies (i.e. floating calipers), drum brake assemblies, and/or drum-in-hat brake assemblies. A brake assembly may include or be defined as one or more brake calipers, one or more brake drums, or a combination thereof. The brake assembly may generally include a rotor, one or more brake pads, one or more brake shoes, one or more brake drums, one or more brake calipers supporting one or more pistons, a link, a cable, a motor gear unit, a motor, a motor brake, a reduction gear system, a differential assembly, a motor brake, actuator assembly, or any combination thereof

A rotor may cooperate with the components of the brake assembly to create the brake force required to maintain a vehicle in a stopped or a parked position. The rotor includes an inboard side and an opposing outboard side. One or more inner brake pads or brake shoes may face the inboard side and one or more outer brake pads or brake shoes may face the outboard side. To create a brake force during a brake apply, a friction material of the brake pads or brake shoes may be moved against at least one of the sides of the rotor so that the rotor may be restricted from rotating. After the friction material of the one or more brake pads or one or more brake shoes is moved away from the rotor, the brake force is released, the rotor can once again rotate.

The brake assembly includes one or more actuator assemblies. The one or more actuator assemblies may function to move one or more pistons, one or more brake pads, one or more brakes shoes or any combination thereof to create or release a brake force. The one or more actuator assemblies may function to convert torque from a motor to move one or more corresponding pistons, one or more brake pads, one or more brake shoes or any combination thereof towards and/or away from the rotor or drum. The one or more actuator assemblies may function to convert rotational movement into linear movement so that the one or more pistons or one or more brake shoes are moved axially. If there is more than one piston, each piston may be dedicated to a corresponding actuator assembly. For example, the one or more actuator assemblies may include a first actuator assembly for moving a first piston or a first brake shoe and a second actuator assembly for moving a second piston or a second brake shoe. The one or more actuator assemblies may be directly and/or indirectly connected to a motor. The one or more actuator assemblies may be housed within a brake assembly, such as within a caliper brake or within a drum brake; within a motor gear unit housing; within a separate actuator housing; or any combination thereof. Each of the one or more actuator assemblies may include a spindle and a nut. The one or more actuator assemblies may be one or more high efficiency actuator assemblies. The one or more high efficiency actuator assemblies may include one or more rotary to linear actuators, such as one or more rolling friction type rotary to linear actuators. For example, the one or more high efficiency actuator assemblies may be a ball screw, a ball ramp, or both.

One or more actuator assemblies include one or more rotary to linear actuators. A rotary to linear actuator may function to transfer torque from a motor to a nut so that a corresponding nut, piston, and/or brake pad linearly moves to create or release a brake force. A rotary to linear actuator may include one or more spindles, one or more nuts, or both. One or more spindles may be directly or indirectly connected to the motor. One or more nuts may cooperate with a corresponding spindle to move a corresponding piston. Rotation of a spindle may cause the corresponding nut to move axially along a piston axis. During a brake apply, the spindle may be rotated in an apply direction, which may cause the corresponding nut to axially move in a brake apply direction and thus move a piston, brake pad, and/or brake shoe towards the rotor to create the brake force. During release of the parking brake, the spindle may be rotated in a release direction, which may cause the corresponding nut to axially move in a release direction so that the corresponding piston, brake pad, and/or brake shoe is moved away from the rotor to release the brake force.

The brake assembly may include one or more differential assemblies. The one or more differential assemblies may function to transfer energy to one or more actuator assemblies so that the one or more actuator assemblies move to create and/or release a brake force. A differential assembly may function to actuate one or more actuator assemblies individually, in unison, or both. A differential assembly may be an epicyclical differential, a spur gear differential, a miter gear differential, or a combination thereof. The differential assembly may be in communication with a torque multiplication assembly, epicyclical assembly, another differential assembly or a combination thereof that provides power to one or more actuator assemblies, provides gear reduction, provides an increase in torque, or a combination thereof. A differential assembly may function to transfer power to actuate one or more actuator assemblies based upon a resistance of each actuator assembly. A differential assembly may function to stop transferring energy to one or more actuator assemblies when resistance increases and divert additional energy to one or more actuator assemblies with a lower resistance so that the energy supplied to the actuator assembly with lower resistance is increased by a factor of 1.5 or more or 2 or less. A differential assembly may alternate transferring power to the actuator assemblies depending on which actuator assembly exhibits the least resistance during movement of the actuator assembly to create a brake force. For example, a differential assembly may assist in moving two rotary to linear actuators (and associated brake pads) simultaneously until a resistance on one side increases and then the differential assembly will transfer all of the energy to the rotary to linear actuator with the lower resistance so that the lower resistance actuator is moved twice as fast as when both actuators are actuated. The differential assembly may alternate and/or simultaneously transfer energy to the actuator assembly until a predetermined brake force is created.

The brake assembly may include one or more torque multiplication assemblies. The one or more torque multiplication assemblies may function to change a rate of rotation of one or more gears in a system relative to a rate of rotation of a torque source, change the torque provided to downstream gears relative to torque provided by a torque source, or both. A torque multiplication assembly may be a gear reduction assembly. A gear reduction assembly may increase torque provided by an input (e.g., motor, drive shaft) and reduce a rate of rotation of downstream gears. The torque multiplication system may be directly or indirectly connected to a motor, drive shaft, differential assembly, actuator assembly, or combination thereof. A torque multiplication assembly may be any assembly which increases and/or decreases torque, a rotate of rotation of gears, or a combination thereof. A torque multiplication assembly and differential assembly as discussed herein may both include parts that are discussed in conjunction with the other. Parts of a torque multiplication assembly and a differential assembly as discussed herein may be used interchangeably to perform the function recited herein for each respective device. The differential assembly, torque multiplication assembly, or both may receive torque generated from a motor gear unit.

The brake assembly may include or be connected to a motor gear unit. A motor gear unit may function to create one or more directions of torque, drive one or more components of the brake assembly in one or more directions; convert an electrical energy into a mechanical energy, or any combination thereof. The motor gear unit may apply a first direction of torque, a second direction of torque, or both to drive a drive shaft. A first direction of torque may create a brake force, second direction of torque may release a brake force, or both. The motor gear unit may house one or more motors, gears, shafts, torque multiplication assemblies, differential assemblies, or a combination thereof. The motor gear unit may reside within a motor gear unit housing. One or more gears within the motor gear unit may function to transfer, increase, decrease, or a combination thereof, torque generated by the motor. The motor gear unit may be directly or indirectly connected to a power source to receive an electrical current. A motor within the motor gear unit may convert an electrical current to one or more directions of torque. A motor may function to rotate a drive shaft, generate torque to directly and/or indirectly move one or more actuator assemblies, or both. The motor may be any power supply that, when incorporated into a brake assembly and energized, will move one or more pistons and/or brake pads to create a brake force, a parking brake force, release a brake force, release a parking brake force, or any combination thereof. A motor may be an electric motor, a pneumatic power supply, a hydraulic power supply, another other power supply, or a combination thereof, that is capable of driving one or more gears in at least one direction. The motor may include and/or be in rotational communication with a drive shaft.

The brake assembly may include a drive shaft. The drive shaft may function to receive torque in one or more directions; transfer power from a motor; transfer torque in one or more directions to one or more of a differential assembly, torque multiplication assembly, motor brake, and actuator assembly; or any combination thereof. The drive shaft may be cylindrical. The drive shaft may have a first end opposing a second end. The drive shaft may be in communication with a motor. The drive shaft may be connected to a motor at a first end. The motor may apply a first direction of torque (e.g., clockwise), a second direction of torque (e.g., counterclockwise), or both to the drive shaft so that the drive shaft may rotate about its rotational axis. The drive shaft may be in rotational communication with, extend toward, and/or extend into one or more of a torque multiplication assembly, differential assembly, motor brake, actuator assembly, or any combination thereof. The drive shaft may be co-axial with a rotational axis and/or longitudinal axis of one or more components of a motor brake. The one or more components of the motor brake may include a toothed wheel, pawl, biasing means, spring washer, electromagnet, bobbin, coil, casing, or any combination thereof. The drive shaft may extend into and/or be in rotational communication with one or more components of the motor brake. The drive shaft may drive a toothed wheel in one or more directions. The drive shaft may be prevented from rotating in one or more directions by the motor brake. The drive shaft may include an extension which engages with a motor brake. The extension may be a motor brake shaft.

A drive shaft may include a motor brake shaft. The motor brake shaft may function to rotationally engage and transfer torque from a drive shaft to a motor brake and/or vice-versa. The motor brake shaft may separate from or integral with a drive shaft. The motor brake shaft may be a portion of the drive shaft extending through and engaged with a motor brake. The motor brake shaft may have a diameter about less than, equal to, or greater than a diameter of a drive shaft. The motor brake shaft may be rotationally engaged with, received within, and/or pass through with one or more components of the motor brake. For example, the motor brake shaft may be rotationally engaged and pass through an opening of a toothed wheel. The motor brake shaft may pass through but not be rotationally engaged with a pawl, biasing means, spring washer, electromagnet, bobbin, coil, casing, or a combination thereof. The motor brake shaft may include any suitable connection for rotationally engaging with a drive shaft, motor brake, or both.

The brake assembly includes a motor brake. The motor brake may function to sustain a brake force, prevent transferring of a back-drive torque through a brake assembly, prevent transfer of torque in a brake assembly when a motor does not create a direction of torque, or any combination thereof. The motor brake may prevent rotation of one or more components of one or more actuator assemblies when a motor does not generate one or more directions of torque. One or more spindles and/or one or more nuts of one or more actuator assemblies may not be able to prevent back-drive due to being part of a high efficiency actuator assembly (i.e., lower friction levels). A motor brake may function to sustain a brake force when a motor is powered off and does not create one or more directions of torque. The motor brake may be located anywhere between a motor and one or more actuator assemblies in which it may provide any of the recited functions. The motor brake may include a plurality of components. The plurality of components of the motor brake may include a toothed wheel, pawl, biasing means, spring washer, electromagnet, bobbin, coil, casing, or any combination thereof. The motor brake may be able to be configured into a plurality of positions. The motor brake may restrict and/or allow rotation of one or more components, prevent back drive, or both while in an engaged position and/or a disengaged position.

The motor brake may be configured into a plurality of positions. The positions may be any configuration of the motor brake so that the motor brake may be mechanically configured, electrically configured, magnetically configured, or any combination thereof. The plurality of positions may include an engaged position, disengaged position, or both. The motor brake may transition between one or more positions into one or more other positions. At least one of the positions may sustain a brake force, prevent transfer of torque, prevent back-drive within a brake assembly, allow the application of a brake force, allow the release of a brake force, or any combination thereof.

The motor brake may be configured into an engaged position. In the engaged position, the motor brake may function to sustain a brake force, prevent transfer of torque to a motor, prevent back-drive within a brake assembly, or a combination thereof. In the engaged position, one or more components which are in rotational communication with a motor may restrict rotation of a drive shaft and/or motor. By preventing rotation of the drive shaft and/or motor, rotation of one or more actuator assemblies, differential assemblies, torque multiplication assemblies, or any combination thereof may also be restricted. In the engaged position, one or more components of the motor brake may urge one or more other components of the motor brake into engagement. Urging of one or more components into engagement may be accomplished with a magnetic field, a biasing means, or both. By urging one or more components into engagement, rotation of one or more components of the motor brake may be restricted from rotating, thus restricting rotation of a drive shaft and/or motor. In the engaged position, an electromagnet of a motor brake may or may not receive an electrical current so that the electromagnet may either generate or not generate a magnetic field. For example, an electromagnet may not receive an electrical current so that a magnetic field is not generated and a biasing means urges a pawl into engagement with a toothed wheel. Alternatively, the electromagnet may receive an electrical current so that a magnetic field is not generated and a biasing means is compressed so that a pawl may engage with a toothed wheel. In the engaged position, a pawl may be grounded (e.g., fixed) relative to a housing such that by engaging with the toothed wheel, the toothed wheel is prevented from rotating. The toothed wheel may be rotationally engaged with a drive shaft so that in the engaged position, the toothed wheel then restricts the drive shaft from rotating.

The motor brake may be configured into a disengaged position. In the disengaged position, the motor brake may function to allow creation and/or release of a brake force, allow transfer of torque from a motor to one or more actuator assemblies, or both. In the disengaged position, one or more components which are in rotational communication with a motor may allow rotation of a drive shaft and/or motor. By allowing rotation of the drive shaft and/or motor, rotation of one or more actuator assemblies, differential assemblies, torque multiplication assemblies, or any combination thereof may also be allowed so a brake force may be created and/or released. In the disengaged position, one or more components of the motor brake may maintain one or more other components of the motor brake disengaged. Maintaining disengagement of one or more components may be accomplished with a magnetic field, a biasing means, or both. By keeping one or more components disengaged, rotation of one or more components of the motor brake may be allowed. In the disengaged position, an electromagnet of a motor brake may or may not receive an electrical current so that it may either generate or not generate a magnetic field. For example, an electromagnet may receive an electrical current so that a magnetic field is generated, a pawl is attracted to the magnetic field and overcomes a biasing force of a biasing means, and the pawl is distanced away from engagement with a toothed wheel. Alternatively, an electromagnet may not receive an electrical current so that a magnet field is not generated, a biasing means urges the pawl away from an electromagnet, and the pawl is distanced away from engagement with a toothed wheel.

In at least one of the one or more positions, the motor brake may include an electromagnetic air gap. The electromagnetic air gap may function as a distance between one or components of the motor brake in which the presence of a magnetic field may flow and attract one or more components toward an electromagnet. The electromagnetic air gap may be any distance between two or more components of the motor brake which allows one or more components of the motor brake to move to and from engagement and/or disengagement with one or more other components of the motor brake due to attraction with the magnetic field. The electromagnetic air gap may be located between any pair of components of the motor brake. The electromagnetic air gap may be located between an electromagnet and a component of the motor brake which is configured to be attracted toward the electromagnet. The electromagnetic air gap may be located between a pawl and an electromagnet. The electromagnetic air gap may be a distance between a pair of components of the motor brake when the motor brake is in the engaged position. The electromagnetic air gap may be a gap between a pawl and an electromagnet in either an engaged position or disengaged position. The electromagnetic air gap may be closed and/or open in either the engaged position or disengaged position. For example, the electromagnetic air gap may be closed when the motor brake is in a disengaged position so that a pawl is disengaged from a toothed wheel and magnetically attracted to the electromagnet. Movement of the pawl from engaged to disengaged from the toothed wheel may result in a disengaged gap forming. The disengaged gap may be located between the toothed wheel and the pawl. The electromagnetic air gap may be referred to as an engaged gap. The electromagnetic air gap may be a distance between a pawl and an electromagnet when the pawl is engaged with the toothed wheel in the engaged position. The disengaged gap may be a linear distance between a pair of components of the motor brake when the motor brake is in the disengaged position. The disengaged gap may be a linear distance between a pawl and a toothed wheel when the pawl is disengaged with the toothed wheel in the disengaged position.

The motor brake includes a toothed wheel. The toothed wheel may function to receive torque from, transfer torque from, prevent transfer of torque to, and/or provide torque to a motor, drive shaft, torque multiplication assembly, differential assembly, actuator assembly, another component of the motor brake, or a combination thereof. The toothed wheel may function to allow and or prevent rotation of a drive shaft when the motor brake is in an engaged position, disengaged position, or both. The toothed wheel may be in direct or indirect rotational communication with a motor, drive shaft, motor brake shaft, torque multiplication assembly, differential assembly, actuator assembly, one or more components of a motor brake, a pawl, a biasing means, a spring washer, or any combination thereof. The toothed wheel may be driven by the drive shaft in one or more directions. When one or more directions of torque are generated by a motor, the toothed wheel may receive torque from a motor, drive shaft, or a combination thereof. When one or more directions of torque are not generated by a motor, the toothed wheel may receive one or more directions of torque from a drive shaft, torque multiplication assembly, differential assembly, actuator assembly, one or more other components of the motor brake, or a combination thereof. When the motor brake is configured in an engaged position and/or disengaged position, the toothed wheel may engage with and/or disengage from one or more other components of the motor brake. The toothed wheel may engage with a pawl of a motor brake in the engaged position. Engagement with a pawl may prevent rotation of the toothed wheel which may restrict rotation of a drive shaft. The toothed wheel may have any shape and/or size which allows it to be in rotational communication with a drive shaft, pawl, or both. The toothed wheel may be any type of gear able to mesh with one or more teeth of another component of the motor brake. The toothed wheel may be a face gear, spur gear, helical gear, internal gear, spur gear, spiral gear, bevel gear, the like, or any combination thereof. The toothed wheel may be co-axial and/or off-center with a rotational axis and/or a longitudinal axis of a drive shaft, pawl, biasing means, spring washer, electromagnet, bobbin, coil, casing, or a combination thereof. The toothed wheel may have a general disc-like shape. The toothed wheel may have opposing surfaces. The one or more surfaces may be generally planar, non-planar, or both. The two opposing surfaces may include a toothed-face, a planar-face, or both. One or more surfaces may face toward a drive source, motor gear unit, motor, drive shaft, or a combination thereof. One or more surfaces may face toward a pawl, biasing means, spring washer, electromagnet, bobbin, coil, casing, or any combination thereof. The opposing surfaces may be joined by a perimeter surface. A perimeter surface may encircle about at least part of or an entire perimeter and/or height of the toothed wheel. Passing partially and/or completely through the toothed wheel may be one or more openings. Projecting from one or more surfaces may be one or more teeth, bosses, or both.

The toothed wheel may include one or more surface teeth. The one or more surface teeth may function to mesh with one or more other components of a motor brake; receive a force opposite a back-drive torque; or both. In an engaged position, disengaged position, or both, the one or more surface teeth may mesh and/or not mesh with one or more teeth of another component of the motor brake so as to be and/or not be in rotational communication with the component. In an engaged position, the one or more surface teeth may mesh with one or more teeth of a pawl; and in a disengaged position, the one or more surface teeth may not mesh with one or more teeth of the pawl. The one or more teeth may project from one or more of the opposing surfaces, perimeter surface, or both. The one or more surface teeth may project toward one or more teeth of another component. The one or more surface teeth may project toward a pawl. The one or more surface teeth may project at an angle generally parallel with, perpendicular to, or any angle therebetween relative to a rotational axis and/or surface of the toothed wheel. One or more surface teeth may include a single tooth or a plurality of surface teeth. A plurality of surface teeth may be about all or a portion of a perimeter of the toothed wheel, may be evenly and/or irregularly spaced, or any combination thereof. Spacing between a plurality of teeth may have any width suitable for meshing with one or more teeth of one or more other components of the motor brake, such as receiving or more teeth of a pawl. The one or more surface teeth may be located radially outward and about one or more bosses, one or more openings, or both. A radial direction may be defined as an axial direction relative to a rotational and/or longitudinal axis. Radially outward may be defined as an axial direction away from a rotational and/or longitudinal axis. Radially inward may be defined as an axial direction toward a rotational and/or longitudinal axis.

The toothed wheel may include one or more bosses. The one or more bosses may function to receive and/or rotatably engage a drive shaft and/or motor brake shaft, one or more other components of the motor brake, or any combination thereof. The one or more bosses may be centered and/or off-center relative to the toothed wheel. The one or more bosses may be co-axial and/or off-center with a rotational axis and/or longitudinal axis of a drive shaft, pawl, biasing means, spring washer, electromagnet, bobbin, coil, casing, or a combination thereof. The one or more bosses may project from one or more surfaces of the toothed wheel, toward one or more other components of a motor brake, or both. The one or more bosses may project in a same or differing direction as one or more surface teeth. The one or more bosses may partially or completely pass through one or more other components of the motor brake. The one or more bosses may be in contact with or free of contact with one or more components of the motor brake to rotationally engage or prevent rotational engagement with the one or more other components. The one or more bosses may have an exterior width (e.g., diameter) which allows the one or more bosses to be in contact or free of contact with the one or more components of the motor brake. The one or more bosses may have an exterior width about less than, equal to, or larger than a width (e.g. diameter) of one or more openings of one or more other components of the motor brake. The one or more bosses may be rotationally engaged a drive shaft. The one or more bosses may receive a drive shaft and/or motor brake shaft therethrough via a shaft receiving opening.

The motor brake may include one or more central openings. The one or more central openings may function to receive a drive shaft, motor brake shaft, boss, hub, or any combination thereof; engage, rotationally engage, and/or prevent engagement of one or more components of a motor brake with one or more components passing therethrough; or any combination thereof. The one or more central openings may partially or completely pass through a thickness of one or more components of a motor brake. The one or more central openings may have a length suitable for engaging with a drive shaft, motor brake shaft, boss, hub, or a combination thereof. The one or more central openings may be co-axial, centered and/or off-center with a rotational axis, longitudinal axis, one or more components of a motor brake, or any combination thereof. The one or more central openings may include one or more engagement features suitable for rotationally engaging with one or more components. The one or more engagement features of a central opening may be keyed, splined, notched, friction-fit, grooved, the like, or any combination thereof. The one or more engagement features may also be suitable for preventing or allowing axial movement of one or more motor brake components along a drive shaft, motor brake shaft, boss, hub, or any combination thereof. For example, the drive shaft, motor brake shaft, boss, hub, or any combination thereof may have one or more splines, ridges, teeth, fillets, and/or the like which mesh with one or more interior walls, grooves, or the like of one or more central openings. The one or more central openings may have a width (e.g., diameter) so that the one or more central openings are free of engagement, rotational engagement, and/or contact with one or more components passing therethrough. The one or more central openings may include one or more shaft receiving openings, one or more boss openings, one or more hub openings, one or more hollow cores, or any combination thereof. One or more shaft receiving openings may function to rotationally engage a toothed wheel with a drive shaft, motor brake shaft, or both. The one or more shaft receiving openings may pass partially or completely through a toothed wheel, a boss, or both. One or more boss openings may function to allow a boss to pass therethrough without rotationally engaging one or more components of a motor brake. The one or more boss openings may pass partially or completely through a pawl, biasing means, spring washer, electromagnet, bobbin, casing, or any combination thereof. One or more hub openings may function to rotationally engage, statically affix, or both a hub to one or more other motor brake components. The one or more hub openings may be referred to as a hollow core of one or more components of the motor brake. The one or more hub openings may pass partially or completely through a bobbin, coil, biasing means, spring washer, pawl, or any combination thereof.

The motor brake may include a pawl. The pawl may function to isolate a torque; to prevent rotation of a toothed wheel, drive shaft, or both; or a combination thereof. The pawl may be monostable, bistable, astable, or any combination thereof with an electromagnet of the motor brake. The pawl may be monostable so that a magnetic field and/or biasing means may be necessary to trigger the pawl to and/or from engagement during the engaged position. The pawl may be comprised of any material which allows it to be attracted and/or repelled from a magnetic field. The pawl may be comprised of any one or more metals. The one or more metals may be ferromagnetic and/or paramagnetic. The one or metals may include iron, nickel, cobalt, steel, copper, aluminum, the like, or any combination thereof. The pawl may have any size and/or shape suitable for engaging with one or more components of the motor brake to be restricted from rotating and/or prevent rotation of one or more other components. The pawl may be generally disc-shaped, bar-shaped, lever-shaped, the like, or any combination thereof. A pawl which is generally disc-shaped may be referred to as an axial pawl. The pawl may be located anywhere in proximity to the toothed wheel such that the pawl may engage one or more teeth of the toothed wheel during the engaged position. By engaging one or more teeth the pawl may be able to prevent rotation of the toothed wheel in one or more directions. The pawl may be located adjacent to one or more opposing surfaces and/or perimeter surfaces of a toothed wheel. An axial pawl may be generally co-axial and/or off-center with and/or located between one or more of a drive shaft, toothed wheel, biasing means, spring washer, electromagnet, bobbin, coil, casing, or any combination thereof. A pawl having a bar and/or lever-shape may be located adjacent and/or generally tangential to at least a portion of a periphery of a toothed wheel. The pawl may have opposing surfaces. The opposing surfaces may include a wheel-facing surface, a spring-facing surface, or both. The one or more surfaces may be planar, non-planar, or a combination of both. The one or more surfaces may face toward and/or away from one or more of a motor, drive shaft, toothed wheel, biasing means, spring washer, electromagnet, bobbin, coil, casing, or any combination thereof. The opposing surfaces may be connected by a perimeter surface. The perimeter surface may be located about all or at least part of an exterior perimeter of the pawl. The pawl may include one or more teeth, projections, tangs, openings, or any combination. The one or more openings may include one or more central openings. The pawl may include one or more boss openings located centrally therein. Located radially about the one or more boss openings may be one or more teeth.

The pawl may include one or more teeth. The one or more teeth may function to engage a toothed wheel; mate with one or more teeth of another gear; prevent rotation of a toothed wheel in one or more directions; or a combination thereof. One or more teeth may include a single tooth or a plurality of teeth. The one or more teeth may be one or more edges, gear teeth, or any combination thereof of a pawl. An axial pawl may include one or more gear teeth. A pawl having a general bar and/or lever shape may have an edge surface and/or angled surface which functions as one or more teeth. The one or more teeth may include one or more angled gear teeth. The teeth may project from and/or form part of one or more of the opposing surfaces, perimeter surfaces, edges, or any combination thereof of the pawl. One or more teeth may project toward one or more components of a motor brake. One or more teeth may project toward a toothed wheel. One or more teeth may engage with one or more surface teeth of the toothed wheel in an engaged position. When engaged, the one or more teeth may prevent rotation of the toothed wheel. A plurality of teeth may be located and/or spaced radially about one or more surfaces of the pawl. One or more teeth may angle away from one or more surfaces of the pawl. The angle may be any angle which allows one or more ends of the one or more teeth to engage with the one or more surface teeth of the toothed wheel in an engaged position and disengage with the one or more surface teeth in a disengaged position. Engaging may be defined as the one or more teeth meshing and/or abutting with the one or more surface teeth. The angle may be planar, perpendicular, or anywhere therebetween relative to the tooth-facing surface. The angle may be about 0 degrees or greater, about 20 degrees or greater, or even about 30 degrees or greater from the tooth-facing surface. The angle may be about 90 degrees or less, about 75 degrees or less, or even about 45 degrees or less from the tooth-facing surface. Located radially inward relative to the one or more teeth may be one or more projections.

One or more components of the motor brake may include one or more projections. The one or more projections may function to engage the one or more components with one or more other components of the motor brake; restrict movement of the one or more components relative to the one or more other components of the motor brake; ground one or more components while the motor brake is in the disengaged position and/or engaged position; or any combination thereof. The one or more projections may have any size, shape, and/or location on one or more components to be received within one or more openings of one or more other components of the motor break. The one or more projections may include one or more tabs, pegs, hooks, fins, rods, pins, the like, or any combination thereof. The one or more projections may project from any surface of a component of a motor brake adjacent to and/or may project toward the one or more other components of the motor brake in which they may be received. The one or more projections may project in a same and/or opposing direction as one or more other projections, tangs, or both. The one or more projects may project from a pawl, a bobbin, a casing, a biasing means, or any combination thereof. While in an engaged position, disengaged position, or both, the one or more projections may reside within or be located outside of one or more slots of one or more other components. The one or more projections may include a single projection or a plurality of projections. The one or more projections may be located radially outward relative to one or more central openings, one or more other projections, or both. The one or more projections may be located radially inward relative to one or more other projections, tangs, perimeter surfaces, or any combination thereof. A plurality of one or more projections may be located radially about a surface of one or more components of the motor brake, about one or more central openings, or both. The one or more projections may include one or more case-engaging projections, spring-engaging projections, case-engaging protrusions, or any combination thereof.

The one or more case-engaging projections may function to ground a pawl relative to a casing so that the pawl may be restricted from rotating when the motor brake is in either or both the engaged position or disengaged position. The one or more case-engaging projections may project from a surface of the pawl toward and/or into a surface of the casing. The one or more case-engaging projections may reside within one or more pawl slots of a casing while the motor brake is in a disengaged position to ground the pawl with the casing and prevent rotation. The one or more spring-engaging projections may function to mate a pawl with a biasing means, such as a spring washer. The one or more spring-engaging projections may project from a surface of the pawl toward and/or into a surface of a biasing means. The one or more spring-engaging projections may reside within one or more pawl slots of a spring washer while the motor brake is in an engaged position, disengaged position, or both so that pawl may be rotationally engaged with the spring washer. The one or more case-engaging protrusions may function to ground (e.g., prevent rotational movement) of a bobbin relative to a casing, housing, or both. The one or more case-engaging protrusions may project from a surface of a bobbin toward and/or into a surface of a casing and/or housing. The one or more case-engaging protrusions may reside with one or more bobbin slots of a casing while the motor brake is in either or both the engaged position and disengaged position.

The pawl may include one or more tangs. The one or more tangs may function to engage the pawl with one or more components of the motor brake; limit and/or restrict rotation of the pawl relative to one or more components of the motor brake; or both. A tang may be located on and/or extend from any surface of the pawl toward the one or more components with which the tang may engage. The one or more tangs may project from a perimeter surface, spring-facing surface, wheel-facing surface, or any combination thereof. The tang may project in a same or different direction as one or more projections of the pawl. The tang may extend at an angle which is generally parallel, perpendicular, or any angle therebetween relative to one or more surfaces of the pawl. The tang may rest within a notch of one or more components. The tang may rest within a notch of a casing. The tang may be radially movable within the notch, may be restricted from radial movement, or both. The tang may have a limited degree of radial movement when the pawl rotates relative to the casing. One or more sidewalls of a notch may restrict radial movement and thus rotation of a pawl relative to a casing. The tang may rest within a notch in the disengaged position, engaged position, or both. The tang may have a length such as that the tang rests within the notch in the disengaged position, engaged position, or both. A length may be measured as a distance from one or more surfaces (e.g., the spring-facing surface) of a pawl to an end of the tang. The length of the tang may be larger than a distance of the engaged gap, a thickness or height of a biasing means in a relaxed state, a flange thickness, or a combination thereof. The tang may remain disposed within a notch when a biasing means is in a deflected state, a relaxed state, or both.

The motor brake includes a biasing means. The biasing means may function to urge the pawl from and/or to disengagement to and/or from engagement, urge the pawl into engagement with a toothed wheel; or both. The biasing means may have any shape, size, and/or style so that it may function as required. The biasing means may be a component separate from the pawl, one or more biasing attachments of the pawl, or both. A biasing means separate from the pawl may include a spring located in proximity to the pawl. The spring may be a spring washer.

The biasing means may include one or more biasing attachments. The biasing attachments may function to allow the pawl to deflect toward a toothed wheel into engagement, urge the pawl away from the toothed wheel into disengagement, or both. The one or more biasing attachments may affix the pawl to one or more components of the motor brake, housing unit, or both. The one or more biasing attachments may affix the pawl to a stationary surface of a housing unit. The one or more biasing attachments may affix the pawl in a hinge-like manner. The biasing attachments may allow a lever or bar-shaped pawl to hinge about the one or more biasing attachments so that the pawl is moveable relative to a stationary surface. The biasing attachments may include one or more fasteners. The one or more fasteners may secure a hinged end of a pawl. The pawl may be able to hinge about the one or more fasteners to move from an engaged position to a disengaged position, vice-versa, or both. The pawl may be made of a material, having a living hinge, and/or have a sufficient thickness that the pawl may be able to deflect away and toward the electromagnet.

The biasing means may include a spring washer. The spring washer may function to urge the pawl into engagement with the toothed wheel, deflect to allow the pawl to disengage with the toothed wheel, or both. The spring washer may have any size and/or shape to urge the pawl into engagement and/or disengagement with the toothed wheel. The spring washer may urge the pawl into engagement and/or disengagement when an electromagnet is not energized, is energized, or both. The spring washer may have a deflected state, a relaxed state, or both. In a deflected state, the spring washer may be compressed such that mechanical energy is stored within the spring washer, one or more spring blades may be compressed toward a ring portion, or both. In a relaxed state, the spring washer may release stored mechanical energy, one or more spring blades may deflect away from a ring portion, or both. The spring washer may be located two or more components of the motor brake. The spring washer may be co-axial with a rotational axis and/or a longitudinal axis of a drive shaft, toothed wheel, pawl, electromagnet, bobbin, coil, casing, or a combination thereof. The spring washer may include a ring portion, one or more spring blades, one or more openings, or a combination thereof. A ring portion may include opposing surfaces. The opposing surfaces may face toward and/or be adjacent with a motor, drive shaft, toothed wheel, pawl, electromagnet, casing, coil, bobbin, or a combination thereof. The ring portion may include one or blades extending therefrom, one or more openings therethrough, or any combination thereof. The one or more openings may include one or more central openings, one or more slots, or a combination thereof. The one or more central openings may include one or more hub openings centrally passing through the ring portion.

The motor brake may include one or more slots in one or more components. The slots may function to receive one or more projections from one or more other components of the motor brake, rotationally couple two or more components of the motor brake, or both. The one or more slots may be located in any of the one or more components of the motor brake which engage with and/or couple to one or more other components of the motor brake. The one or more slots may be located in a toothed wheel, pawl, biasing means, spring washer, electromagnet, bobbin, casing, or any combination thereof. The one or more slots may receive one or more protrusions. The one or more slots may restrain radial movement of one or more protrusions residing therein and/or may rotationally couple two or more components. The one or more slots may be located through one or more surfaces of one or more components of the motor brake. The one or more slots may pass partially or completely through a thickness of one or more components of the motor brake. The one or more slots may have a shape corresponding with one or more shapes of one or more protrusions. The one or more slots may include a single slot or a plurality of slots. A number of slots in one component may be equal to or greater than a number of protrusions in another component to which it couples. The one or more slots may be located radially inward from a perimeter surface of one or more components, radially outward from one or more central openings of one or more components, or both. A plurality of slots may be spaced radially about a surface of one or more components of the motor brake, about one or more central openings, or both. The one or more slots may include one or more pawl slots, one or more bobbin slots, or both. One or more bobbin slots may function to couple a bobbin with a casing, ground a bobbin relative to a casing, or both. The one or more bobbin slots may be radially spaced on a surface, about a hub, and/or about an opening of a casing. A plurality of bobbin slots may be radially spaced on an end wall of a casing and radially spaced about hub of the casing. One or more pawl slots may function to rotationally engage and/or ground a pawl with a spring washer, a casing, or both. One or more pawl slots may receive one or more protrusions from a pawl to couple a pawl with a spring washer, casing, or both. One or more pawl slots may be located radially about a surface of a ring portion of a spring washer and/or casing, about a central opening of a spring washer and/or casing, or both. One or more pawl slots may extend through a wall of a casing, such as a pawl facing wall of a hub. One or more pawl slots may be located between one or more spring blades.

The spring washer may include one or more spring blades. The one or more spring blades may function to urge the pawl into an engaged position, limit rotation of a pawl while in a disengaged and/or engaged position, or both. The one or more spring blades may be located anywhere about a spring washer where the one or more spring blades may be able to urge the pawl into an engaged position by releasing stored energy, deflect to allow the pawl to move into a disengaged position, or both. The one or more spring blades may include a single blade or a plurality of blades. A plurality of blades may be about less than or equal to a number of pockets of an electromagnet, bobbin, or both. One or more spring blades may include one or more, two or more, or even three or more blades. One or more spring blades may include ten or less, eight or less, or even five or less blades. One or more spring blades may be located radially outward relative to one or more central openings, radially inward relative to an outer periphery of a ring portion, or both. A plurality of blades may be located radially about a central opening. The one or more spring blades may be hingedly affixed and/or integral with a ring portion of the spring washer. The one or more spring blades may be integrally affixed with the ring portion via a living hinge. The living hinge may function to store mechanical energy while one or more spring blades are deflected into the deflected state, release mechanical energy to release one or more spring blades into a relaxed state, or both. The one or more spring blades may be integrally connected to and/or detached from a ring portion at one or more ends. The one or more ends may include an integral end generally opposing a blade end. The one or more integral ends may be an end of the blade where the blade is affixed and/or integral with a ring portion. An integral end of the one or more spring blades may adjacent to, integral with, or include a living hinge. The one or more blade ends may be an end of the blade free of direct attachment to the ring portion, the end of the blade which projects away from the ring portion when the spring washer is in a relaxed state, or both. As a spring washer is compressed into a partially and/or fully deflected state, each spring blade may deflect (e.g. hinge) about an integral end. Upon deflection during compression, a distance between a blade end and one or more surfaces of a spring washer may decrease. As a spring washer is released into a partially deflected or relaxed state, a distance between a blade end and one or more surfaces of a spring washer may increase. The one or more spring blades may have a length. The length may be measured as a distance between an integral end and a blade end. If one or more spring blades have an arc-like shape from the integral end to blade end, the length may be measured as an arc length. The length of the one or more spring blades may be about equal to or less than a length of the one or more pockets. The length may allow the one or more spring blades to at least partially reside within the one or more pockets, abut to one or more stops, or both. The one or more spring blades may abut with one or more stops when a pawl transfers torque from a toothed wheel to the spring washer resulting in the spring washer rotating or having a tendency to rotate about the rotational axis.

The motor brake includes an electromagnet. The electromagnet may function to attract a pawl so the motor brake may move into an engaged position, disengaged position, or both; work with one or more components to compress a biasing means; or any combination thereof. The electromagnet may include a bobbin, coil, casing, or a combination thereof. The electromagnet may be co-axial and/or off-center with a rotational axis and/or a longitudinal axis of a drive shaft, toothed wheel, pawl, biasing means, spring washer, or a combination thereof. The electromagnet may be in electrical communication with one or more components of a brake assembly, motor gear unit, a power source, any combination thereof. The electromagnet may include a solenoid. The solenoid may function to convert an electrical current into a magnetic field, attract a component of the motor brake into engagement and/or disengagement, allow movement of one or more components of a motor gear unit, or any combination thereof. The solenoid may include a coil, a bobbin, or both.

The solenoid may include a coil. The coil may have any size and/or shape to function as a solenoid. The coil may be wound in a shape which is generally cylindrical, cubed, prismed, coned, spherical, or a combination thereof. The coil may be helically wound. The coil may include 1 or more, 2 or more, or even 5 or more helical loops. The coil may include 50 or less, 40 or less, or even 10 or less helical loops. The coil may be made of any material suitable for use in a solenoid. The material may include a magnetic wire. The magnetic wire may be made of one or more metals, be coated in an insulation, or both. The metals may include copper, aluminum, the like, or a combination thereof. A length of the coil may be about less than, equal to, or larger than a diameter of the coil. The length may be measured generally parallel with a longitudinal axis, perpendicular to a diameter, or both. The coil may include a single wire or a plurality of wires. The coil may be in electrical communication with a power source. The coil may include or be in electrical communication with one or more free ends of one or more electrical wires which are not helically wound. The one or more free ends may be referred to as a pigtail. The pigtail may extend away from the wound portion of the coil, a bobbin, or both. The pigtail may pass through one or more openings of a bobbin, casing, or both. The one or more free ends may be in indirect or direct electrical communication with the power source. The coil may be wound about a core or free of a core. The core may include a bobbin, such as a spindle of a bobbin.

The electromagnet may include a bobbin. The bobbin may function as a core of a solenoid, to ground the solenoid within the casing, to ground one or more other components relative to the casing, or any combination thereof. The bobbin may have any suitable shape and/or size to provide a core for the solenoid, reside within the casing, ground (e.g., retain fixed) one or more components of the motor brake relative to the casing, or any combination thereof. The bobbin may have a generally cylindrical, cubed, prismed, coned, spherical, or a combination thereof. The bobbin may be made of any material suitable for providing a core of a solenoid. The material may be magnetic material. The magnetic material may be made from a ferromagnetic or ferrimagnetic material. The magnetic material may include iron, nickel, cobalt, alloys thereof, minerals, the like, or any combination thereof. To provide a core for the solenoid, the bobbin may have a coil wrapped around at least a portion of or all of an exterior perimeter (e.g., diameter). The bobbin may be partially or completely disposed within a casing. The bobbin may be co-axial with a rotational axis and/or a longitudinal axis of a drive shaft, toothed wheel, pawl, biasing means, spring washer, coil, casing, or a combination thereof. The bobbin may include one or more of a spindle, one or more openings, protrusions, flanges, or any combination thereof. The bobbin may include a spindle adjacent to and between two opposing flanges. The bobbin may be hollow. The hollow portion may be referred to as a hollow core. The hollow core may function as one of the one or more boss openings of the motor brake as described hereinbefore. The hollow core may also function to receive at least a portion of the casing therein. The hollow core may allow the casing to engage with the pawl. The hollow core may receive a hub of the casing therein so that the hub may be engaged with the pawl. The hollow core may be formed within a spindle of the bobbin.

A bobbin may include a spindle. The spindle may function as the core of the solenoid, connect opposing flanges, or both. The spindle may have any size and/or shape to function as a core of the solenoid; reside within the casing; be grounded to the casing; receive one or more components of the brake assembly, motor brake, or both therethrough; or any combination thereof. The spindle may be generally cylindrical, cubed, prismed, coned, spherical, or a combination thereof. The spindle may have a similar shape as a coil. The spindle may have a coil wrapped about all or a portion of its length. The length may be measured generally parallel to a longitudinal axis of the bobbin. The longitudinal axis may be the axis of a hollow core. The hollow core may be a central opening passing through the bobbin. The spindle may have an outer width (e.g., diameter). The outer width may be about less than or equal to an outer width of one or more flanges; about less than an inner width of a casing; or both. The outer width may be about less than an outer width of the one or more flanges so that if a coil is wrapped about the spindle, the outer width of the coil may be about less than or equal to an outer width of the flanges, an inner width of the casing, or both. The spindle may be adjacent to, integral with, and/or between one or more flanges.

A bobbin may include one or more flanges. The flanges may function to retain the solenoid grounded (e.g., fixed) relative to the casing; retain one or more other components of the motor brake fixed relative to the casing; magnetically attract and/or mate with one or more other components of the motor brake while in an engaged or disengaged position; or any combination thereof. The one or more flanges may have any size and/or shape suitable for performing the required functions. The one or more flanges may have a similar or differing shape to one or more other flanges, the spindle, or both. The one or more flanges may be co-axial and/or off-center relative to one or more other flanges, the spindle, or both. One or more flanges may include a single flange or a plurality of flanges. One or more flanges may be opposing one or more other flanges. One or more flanges may include an anti-rotation flange and as spring-engaging flange. An anti-rotation flange may be located at an opposing end of a spindle as a spring-engaging flange. An anti-rotation flange may include one or more case-engaging protrusions projection therefrom. A spring-engaging flange may include one or more blade pockets, blade stops, or both. One or more flanges may be located proximate an open end of a casing, a closed end of a casing, or both. One or more flanges may include one or more openings. The one or more openings may include a hollow core, one or more coil openings, or both. The one or more openings may include a hollow core of a bobbin passing therethrough. The hollow core may extend from one flange to an opposing flange such that the hollow core passes through an entire length of the bobbin. The one or more openings may include one or more coil openings. The one or more coil openings may be located radially outward from a hollow core, between one or more projections, or both. The one or more coil openings may be aligned with one or more other coil openings, such as a coil opening of a casing. The one or more coil openings may allow one or more wires of a coil to pass through. The one or more flanges may include one or more pockets, stops, projections (e.g., case-engaging protrusions), or a combination thereof.

A bobbin may include one or more stops. The one or more stops may function to prevent rotational movement of one or more spring blades of a biasing means, limit movement of a pawl toward a magnetic field, or both. The one or more stops may be located on any surface of a bobbin such that the one or more stops may contact and prevent rotational movement of one or more spring blades, contact and prevent axial movement of a pawl further toward a magnetic field, or both. The one or more stops may be located on one or more flanges of a bobbin, a flange facing away from an end wall of a casing, a flange in proximity to an open end of a casing, or any combination thereof. For example, the one or more stops may be located on a spring-engaging flange. The one or more stops may project away from a surface of the spring-engaging flange; away from a spindle; toward a biasing means, spring washer, and/or pawl; or any combination thereof. The one or more stops may be spaced radially about a surface of the flange, radially about a hollow core, or both. The one or more stops may be evenly and/or irregularly spaced from one another. The one or more stops may include a single or a plurality of stops. The one or more stops may include a number of stops less than, about equal to, or greater than a number of blades of a biasing means, projections from a pawl, or both. The one or more stops may have a height. The height may be measured generally perpendicular to a surface from which the one or more stops project, parallel with a rotational and/or longitudinal axis, or a combination thereof. A height of the one or more stops may allow one or more projections from a pawl to abut with the one or more stops; provide an electromagnetic air gap between the toothed wheel, the pawl, the bobbin, or a combination thereof; provide sufficient space for a biasing means between the pawl and the bobbin; or any combination thereof. The height of the one or more stops may be about equal to or greater than a thickness of a biasing means, spring washer, and/or one or more spring blades. One or more spring blades may be located adjacent to and/or in contact with the one or more stops. One or more spring blades may abut with one or more stops when receiving torque, such as from a pawl. The stops may prevent further radial movement of the one or more spring blades, thus preventing further rotation of a spring washer. The one or more spring blades may reside within spaces adjacent to the one or more stops. The spaces between the one or more stops may be referred to as one or more pockets.

A bobbin may include one or more pockets. The one or more pockets may to receive at least a portion of a biasing means so the biasing means may partially reside within a casing, house one or more spring blades of a biasing means, or both. The pockets may receive at least a portion of a biasing means such that the biasing means may partially reside within a casing. The one or more pockets may provide a space for one or more spring blades of a biasing means to reside within when the biasing means is in a deflected state, relaxed state, or anywhere therebetween. The one or more pockets may be one or more surfaces of a bobbin, one or more flanges, or both which are free of having one or more stops projecting therefrom. The one or more pockets may be the one or more spaces formed between one or more stops. The one or more pockets may have a length. The length may be measured as a distance between two adjacent surfaces of stops. If a surface the one or more pockets is formed on is generally circular, the length may be measured as an arc length. The length of the one or more pockets may be about equal to or greater than a length of the one or more spring blades. The length may allow the one or more spring blades to reside within the one or more pockets, allow the one or more spring blades to abut to one or more stops, or both. The length of the pockets may allow a biasing means to have a limited rotational freedom relative to a casing.

The electromagnet may include a casing. The casing may function to ground the electromagnet to a housing, brake assembly, or both; may function as a magnetic core; may function to magnetically attract a pawl; or any combination thereof. The casing may house a bobbin, coil, biasing means, or a combination thereof. The casing may be co-axial and/or off-center with a rotational axis and/or a longitudinal axis of a drive shaft, toothed wheel, pawl, biasing means, spring washer, coil, bobbin, or a combination thereof. The casing may have any suitable shape for housing an electromagnet, a bobbin, a coil, a biasing means, or a combination thereof. The casing may have any suitable shape for restricting rotational and/or axial movement of an electromagnet, a bobbin, a pawl, or any combination thereof. The casing may have a shape generally similar to that of the bobbin. The casing may be generally cylindrical, cubed, prismed, coned, spherical, or a combination thereof. The casing may be fixed relative to a housing unit so the casing may be prevented from rotational and/or axial movement relative to a rotational and/or longitudinal axis of the motor brake and/or drive shaft. The casing may include one or more engagement features for being statically affixed to the housing unit. The one or more engagement features may include one or more fasteners, keys, splines, notches, grooves, a friction-fit, the like, or any combination thereof so the casing may be statically affixed to the housing unit. The casing may include a bobbin-retaining well, a hub, a flange, one or more openings, or any combination thereof.

A bobbin-retaining well may retain all or a portion of a bobbin, coil, biasing means, pawl, or any combination thereof. The bobbin retaining well may be formed by an outer wall, an end wall, an inner wall, a rim, a hub, or any combination thereof. An outer wall (e.g., outer cylindrical wall) may be an outer wall of the casing having a shape similar to the bobbin and a width (e.g., diameter) about equal to or larger than an outer width of the bobbin. The outer wall may be a cylindrical wall. The outer wall may extend from an open end to a closed end of the casing. The outer wall may include a rim formed about an open end of the casing. The outer wall may be opposing an inner wall (e.g., inner cylindrical wall). The open end of the casing may face toward a biasing means, pawl, toothed wheel, motor, or any combination thereof. The rim may face toward and/or be adjacent to a pawl. The open end of the casing may include a flange extending therefrom. The flange may extend from the cylindrical wall, an outer wall, an inner wall, the rim, or any combination thereof. The flange may extend at an angle generally perpendicular, parallel, or any angle therebetween relative to the outer wall. The flange may include one or more features for engaging and limiting a degree of rotation of a pawl, toothed wheel, biasing means, or any combination thereof. The flange may be formed about all or a portion of an outer perimeter of an open end and/or rim of the outer wall. The flange may include a notch for receiving a tang. At the opposing end of the retaining well as the flange is an end wall. The end wall may be adjacent to and/or integral with the outer wall. The end wall may be generally perpendicular to the cylindrical wall to form a closed end of the casing. The end wall may include one or more slots, one or more central openings, one or more openings, one or more hubs, or any combination thereof. The end wall may include one or more slots, such as bobbin slots spaced radially about its surface. The end wall may include a central opening passing therethrough so a drive shaft, motor brake shaft, or both may extend through the motor brake. The end wall may include one or more coil openings. The one or more coil openings may be located between one or more slots, aligned with one or more other coil openings, or both. The one or more coil openings may receive a portion of a coil therethrough.

The casing may include a hub. The hub may function to axially and/or rotationally engage one or more components of a motor brake, limit rotational and/or axial movement of one or more components of the motor brake, or both. The hub may be formed as a portion of the casing located within the bobbin retaining well, which resides within one or more other components of the motor brake, receives one or more components of the motor brake and/or brake assembly, or any combination thereof. The hub may be generally co-axial and/or off-center with a rotational axis and/or longitudinal axis of a drive shaft, toothed wheel, biasing means, electromagnet, or any combination thereof. The hub may have any suitable shape for passing through, engaging, being free from engagement, or any combination thereof with one or more central openings. The hub may extend partially or completely from a closed end to an open end of the casing. The closed end may project inwardly from an end wall of the closed end. The closed end may be formed integrally or affixed to the end wall. The hub may be formed as a depression, boss, or projection from the end wall toward the open end of the bobbin retaining well. The hub may have a shape similar to a hollow core of a bobbin. The hub may be generally cylindrical. The hub may be located within the hollow core of a bobbin. The hub may be spaced from the outer wall. The space between the hub and the outer wall may have the same general shape as a bobbin, may be annular, or both. The space between the hub and the outer wall may be referred to as the bobbin recess of the casing as the bobbin may be housed between the hub and the outer wall. The hub may include a wall. The wall may be located opposite an end wall, adjacent and/or at the open end of the casing, or both. The wall may be located adjacent to a biasing means, a pawl, or both. The wall may face toward the pawl such that it is referred to as a pawl-facing wall. The wall may be generally parallel with a flange, end wall, or both. The wall may include one or more openings, one or more slots, or both. The wall may include one or more central openings passing therethrough, such as one or more boss openings. The wall may include one or more slots radially spaced about its surface. The one or more slots may include one or more pawl slots.

The casing may include one or more notches. The one or more notches may function to cooperate with one or more tangs to restrict rotation of a pawl, toothed wheel, biasing means, or a combination thereof; maintain a pawl grounded to a casing; or any combination thereof. The notch may function to apply force to a pawl, such as a tang, in at least one of the directions of rotation. The notch may be a cut-out in the casing. The notch may be a cut-out in a flange of the casing. The notch may be a cut-out about an outer circumference of a flange of the casing. The notch may extend inward (e.g., a rotational axis) from the outer circumference. The notch may extend toward a rim, an inner wall, a cylindrical wall, or a combination thereof of the casing. The notch may include a plurality of notch walls. The notch walls may come into contact with the tang during rotation of the pawl. The notch walls may prevent further movement of the tang and thus prevent further rotation of the pawl. The width of the notch may be about equal to or greater than width of a tang. The width may allow for movement of the tang within the notch. The width may allow for radial movement of the tang so that the pawl may have some degree of rotation about its rotational axis. The width of the notch may allow for rotation of the pawl of about 1 degree or greater, 2 degrees or greater, or even 3 degrees or greater. The width of the notch may allow for rotation of the pawl of about 10 degrees or less, about 7 degrees or less, or even about 5 degrees or less. A width of the notch may be measured radially from one notch wall to an opposing notch wall. The width may be about 1 degree or greater, about 2 degrees or greater, about 5 degrees or greater, or even about 10 degrees or greater. A width of the notch may be about 30 degrees or less, about 20 degrees or less, or even about 15 degrees or less.

The brake assembly may include a housing unit. The housing unit may house one or more components of a motor gear unit, motor brake, or both. The housing unit may include one or more housing sections. One or more sections may be affixed to one or more other sections. One or more sections may be affixed via one or more fasteners to one or more other sections. The one or more fasteners may include one or more threaded fasteners, such as one or more bolts, studs, screws, nuts, the like, or a combination thereof. One or more sections include a motor gear housing unit, a motor brake housing unit, or both. A motor gear unit may function to house one or more components of a motor gear unit. One or more components may include one or more motors, gears, drive shafts, or a combination thereof. A motor brake housing unit may function to house one or more components of a motor brake. One or more components may include a toothed wheel, pawl, biasing means, spring washer, electromagnet, bobbin, coil, casing, or a combination thereof. One or more sections of the housing unit may include one or more features to prevent rotational movement of one or more components it houses. The one or more features may include one or more fasteners, keys, splines, notches, grooves, a friction-fit, the like, or any combination thereof. The motor gear housing unit may keep one or more components of the motor gear statically affixed thereto. The motor brake housing unit may keep one or more components of the motor brake statically affixed thereto. The motor brake housing unit may maintain an electromagnet grounded (e.g., statically fixed, axially fixed, rotationally fixed) thereto.

The disclosure further relates to a method of assembling a motor brake to a brake assembly. The method may include supporting one or more components of the brake assembly, forming a motor brake, and installing a motor brake to the brake assembly. Supporting one or more components of the brake assembly may include axially and/or rotationally restraining a drive shaft, motor brake shaft, or both. Forming a motor brake may include angularly aligning one or more components of the motor brake relative to one or more other components of the motor brake. Angularly aligning the components may be a single step or a plurality of steps. Angularly aligning multiple components may be completely separately or simultaneously. Angularly aligning may include aligning a toothed wheel with a pawl, a pawl with an electromagnet, a pawl with a biasing means, or a combination thereof. Angularly aligning may include aligning a toothed wheel with a pawl so that the pawl is adjacent to the toothed wheel, in direct contact with the toothed wheel, one or more teeth of the pawl mesh with one or more surface teeth of the toothed wheel, one or more teeth of the pawl with and are not meshed with one or more surface teeth of the toothed wheel, forming an electromagnetic air gap between a toothed wheel and a pawl, or any combination thereof. Angularly aligning a pawl with a biasing means may include aligning a pawl with a spring washer so that a spring washer is adjacent to the pawl, inserting one or more projections (e.g., spring-engaging projections) into one or more slots of the biasing means, or both. Angularly aligning a pawl with an electromagnet may include locating a pawl adjacent to an electromagnet, casing, bobbin, and/or one or more flanges of the casing and/or bobbin; disposing a tang into a notch; abutting one more projections (e.g., case-engaging projections) with a surface of an electromagnet, casing, or both; forming an electromagnetic air gap between a surface of the pawl and the electromagnet and/or casing; or any combination thereof. Installing a motor brake to a brake assembly may include locating one or more central openings of a motor brake onto a drive shaft, motor brake shaft or both; installing a drive shaft and/or motor brake shaft into a boss opening of a toothed wheel; press-fitting a toothed wheel with a drive shaft and/or motor brake shaft; or any combination thereof.

### ILLUSTRATIVE EMBODIMENTS

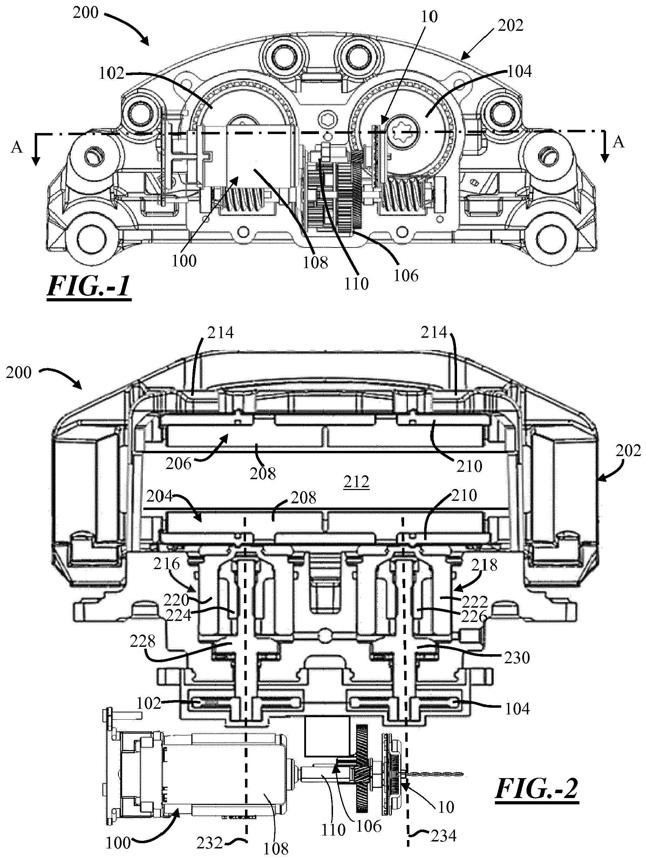

FIG. 1 is a planar view of a brake assembly 200 and FIG. 2 illustrates a cross-section of the brake assembly 200 of FIG. 1 taken along line A-A. The brake assembly 200 includes a brake caliper 202, a motor gear unit 100, and a motor brake 10. The motor gear unit 100 includes a motor 108 which is in communication with the motor brake 10 via a drive shaft 110. The brake caliper 202 includes an inner brake pad 204 and an outer brake pad 206. Each brake pad 204, 206 includes a friction material 208 and a pressure plate 210. The brake pads 204, 206 are arranged in the brake caliper 202 so that the friction material 208 of each brake pad 204, 206 faces a side of a rotor 212. The brake caliper 202 includes fingers 214 that, during a brake apply, contact the outer brake pad 206 and move the outer brake pad 206 towards the rotor 212. The brake caliper 202 further includes a first actuator assembly 216 located near a first or leading end of the inner brake pad 204 and a second actuator assembly 218 located near a second or trailing end of the inner brake pad 204. The motor gear unit 100 includes worm wheels 102, 104, a differential 106 and a motor 108. The first actuator assembly 216 includes a first piston 220 moveably supported in a first piston bore, a first spindle nut 224 in communication with the first piston 220, and a first spindle 228 in communication with the first spindle nut 224 and the first worm wheel 102. Similarly, the second actuator assembly 218 includes a second piston 222 moveably supported in a second piston bore, a second spindle nut 226 in communication with the second piston 222, and a second spindle 230 in communication with the second spindle nut 226 and the second worm wheel 104.

To apply the brake during a parking brake operation, the motor 108 rotates the drive shaft 110 and the differential 106 in a first direction D₁ (not shown), causing one or both of the worm wheels 102, 104 to rotate in a locking direction. Rotation of one or both of the worm wheels 102, 104 in a locking direction causes a corresponding one or both of the spindles 228, 230 to rotate a corresponding spindle nut 224, 226 in a locking direction. Rotation of a respective spindle nut 224, 226 in a locking direction causes a corresponding piston 220, 222 to move along a respective piston axis 232, 234 and move the inner brake pad 204 towards the rotor 212. Movement of the inner brake pad 204 towards the rotor 212 causes the outer brake pad 206 to also move towards the rotor 212, via the fingers 214, until the friction material 208 of one or both brake pads 204, 206 contacts the rotor 212 to apply the brake. To release the brake, the motor 108 rotates the differential 106 in an opposing, second direction D₂ (not shown), causing both worm wheels 102, 104 to rotate in an unlocking direction, which causes the corresponding spindles 228, 230 to rotate both corresponding spindle nuts 224, 226 in an unlocking direction. Rotation of the spindle nuts 224, 226 in the unlocking direction causes the corresponding pistons 220, 222 to move along their respective axis 232, 234 and allows the inner brake pad 204 to move away from the rotor 212 so that the brake pads 204, 206 are no longer in contact with the rotor 212.

After the brake is fully applied the motor 108 is powered off. The drive shaft 110 does not receive a torque from the motor 108. A reaction torque is received by the drive shaft 110 via the differential 106. The reaction torque rotates (e.g., back-drives) the drive shaft 110 in the same direction as if the motor 108 were rotating the drive shaft 110 in the opposing, second direction D₂ (not shown). The motor brake 10 restrains and prevents the back-drive of the drive shaft 110. The motor brake 10 creates a force which locks the drive shaft 110 relative to the motor 108 and differential 106, so that the brake apply is maintained when the motor 108 is powered off after the brake is fully applied.

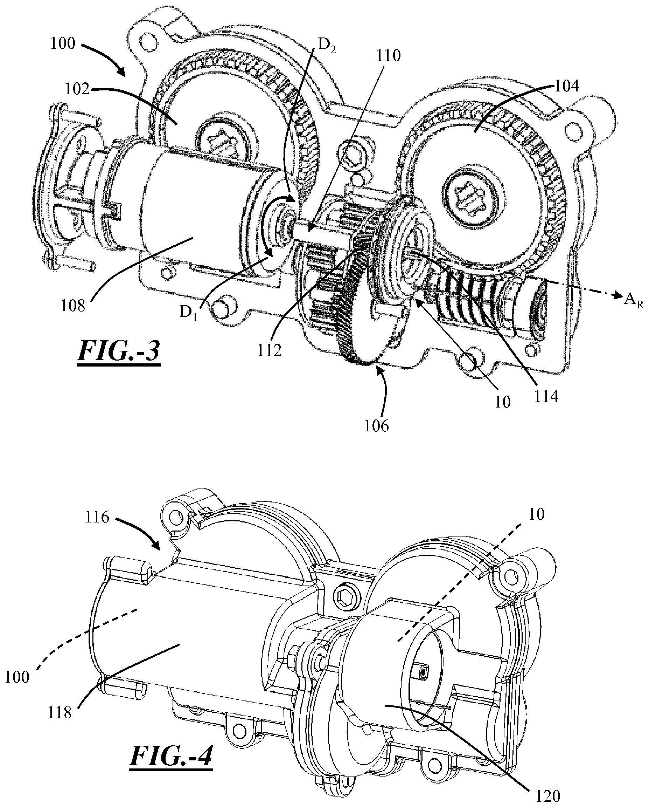

FIG. 3 is a perspective view of the motor gear unit 100 and motor brake 10 assembled together. The motor gear unit 100 includes a motor 108. The motor 108 drives a drive shaft 110. The motor 108 drives the drive shaft 110 in a first direction D₁ and a second direction D₂. The drive shaft 110 includes or is in rotational communication with a helical gear 112. The helical gear 112 is rotatably engaged with or part of the differential 106. The drive shaft 110 includes a motor brake shaft 114 which is received in the motor brake 10. The drive shaft 110, the motor brake shaft 114, and the motor brake 10 are all co-axial about a rotational axis A_{R}.

FIG. 4 illustrates a housing unit 116. The housing unit 116 is connected to the caliper 202, as shown in the brake assembly 200 in FIG. 1. The housing unit 116 includes a motor gear housing unit 118. The motor gear housing unit 118 houses the motor gear unit 100. The housing unit 116 includes a motor brake housing unit 120. The motor brake housing unit 120 houses the motor brake 10. The motor brake housing unit 120 encloses a casing 42 (not shown). The casing 42 is grounded to the motor brake housing unit 120, so that the motor brake housing unit 120 prevents the casing 42 from rotating within the motor brake housing unit 120.

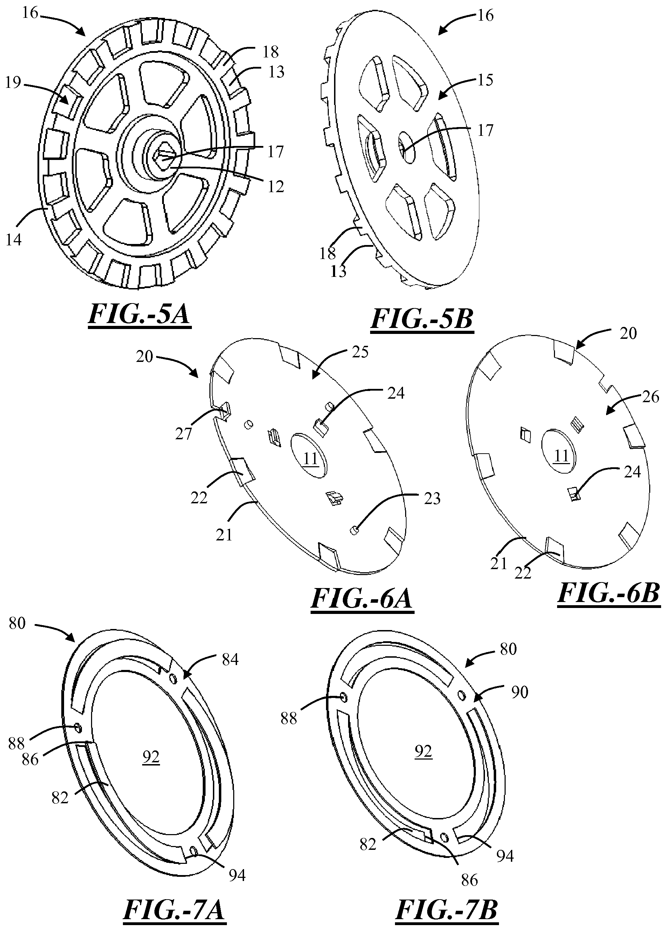

FIG. 5A and 5B illustrate opposing surfaces of a toothed wheel 16. FIG. 5A illustrates a toothed face 19 of the toothed wheel 16. Opposing the toothed face 19 is a planar face 15 (FIG. 5B). The toothed wheel 16 is a face gear. Projecting from the toothed face 19 is a plurality of surface teeth 18. Located between the plurality of surface teeth 18 is a plurality of pawl receiving apertures 13. The surface teeth 18 also form part of the perimeter surface 14 of the toothed wheel 16. The toothed wheel 16 includes a boss 12. The boss 12 is located centrally in the toothed wheel 16. The boss projects away from the geared face 19. The boss 12 projects in the same direction as the plurality of surface teeth 18. The toothed wheel 16 includes a shaft receiving opening 17. The shaft receiving opening 17 is located centrally within the toothed wheel 16 and the boss 12. The shaft receiving opening 17 passes from the planar face 15 through the toothed face 19. The shaft receiving opening 17 is located centrally within the boss 12. The shaft receiving opening 17 extends through the boss 12.

FIG. 6A illustrates a spring-facing surface 25 of a pawl 20 and FIG. 6B illustrates a wheel-facing surface 26 which opposes the spring-facing surface 25. Located centrally within the pawl 20 is a boss opening 11. The pawl 20 includes a perimeter surface 21. Located between the boss opening 11 and the perimeter surface 21 is a plurality of case-engaging projections 24. The case-engaging projections 24 resemble tabs. The case-engaging projections 24 project from the spring-facing surface 25. The case-engaging projections 24 are spaced about the boss opening 11. Located between the case-engaging projections 24 and the perimeter surface 21 is a plurality of spring-engaging projections 23. The spring-engaging projections 23 resemble pegs. The spring-engaging projections 23 are spaced about the boss opening 11. The spring-engaging projections 23 project from the spring-facing surface 25. The pawl 20 further includes a plurality of angled teeth 22. The plurality of angled teeth 22 form part of the perimeter surface 21. The plurality of angled teeth 22 are spaced about the perimeter 21 of the pawl 20. The plurality of angled teeth 22 angle from the spring-facing surface 25 past the wheel-facing surface 26. The pawl 20 further includes a tang 27. The tang 27 projects from both the perimeter surface 21 and the spring-facing surface 25. The tang 27 projects away from the spring-facing surface 25 in the same general direction as the plurality of case-engaging projections 24 and spring-engaging projections 23. The tang 27 extends generally orthogonal relative to the spring-facing surface 25.

FIG. 7A illustrates a bobbin-facing surface 84 of a spring washer 80. FIG. 7B illustrates a pawl-facing surface 90 opposite the bobbin-facing surface 84. Located centrally within the spring washer 80 is a hub opening 92. The hub opening 92 extends from the bobbin-facing surface 84 through the pawl-facing surface 90. Located about the hub opening 92 is a plurality of spring blades 82. Each spring blade 82 is integrally connected to the bobbin-facing surface 84 at an integral end 94. Opposite the integral end 94, each spring blade 82 includes a blade end 86. Each blade end 86 is detached from the bobbin-facing surface 84. When the spring washer 80 is compressed, each spring blade 82 deflects about the integral end 94, such that the distance between the blade end 86 and the bobbin-facing surface 84 decreases. When the spring washer 80 is released, each spring blade 84 pivots relaxes such that the distance between the blade end 86 and the bobbin-facing surface 84 increases. Located about the hub opening 92 and between the spring blades 82 are pawl slots 88. The pawl slots 88 extend from the bobbin-facing surface 84 through the pawl-facing surface 90.

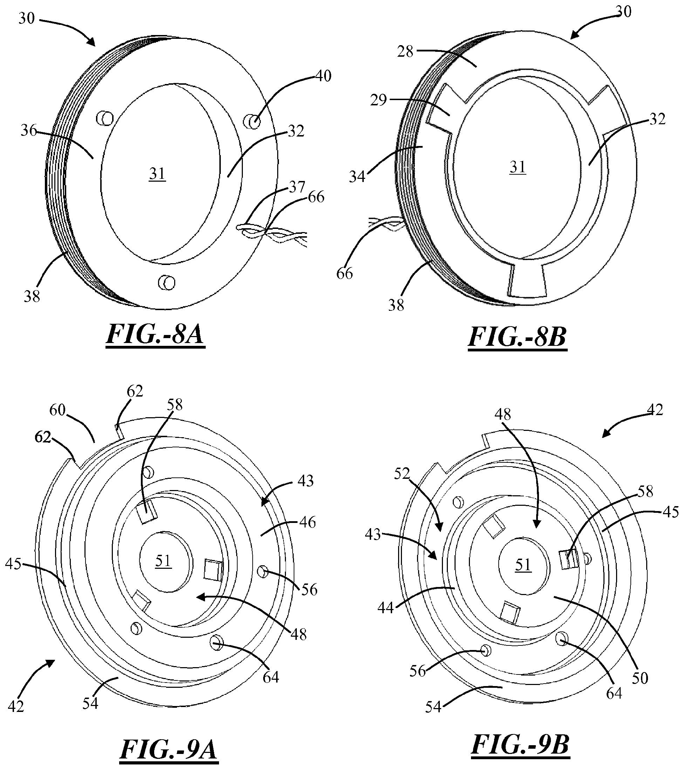

FIG. 8A illustrates an end of a bobbin 30 having an anti-rotation flange 36 and FIG. 8B illustrates an opposing end of the bobbin 30 having a spring-engaging flange 34. The bobbin 30 includes a spindle 32 extending between and connecting the spring-engaging flange 34 to the anti-rotation flange 36. The bobbin 30 includes a hollow core 31 which passes through the spring-engaging flange 34, the spindle 32, and the anti-rotation flange 36. Wrapped about the spindle 32 is a coil 38. A pigtail 66 is electrically connected to or part of the coil 38. The pigtail 66 extends away from the bobbin 30 so that the coil 38 is connected to a power source (not shown) to receive an electrical current. The pigtail 66 passes through a coil opening 37 in the anti-rotation flange 36. The anti-rotation flange 36 includes a plurality of case-engaging protrusions 40. The case-engaging protrusions 40 are peg-shaped. The case-engaging protrusions 40 project generally orthogonal relative to the surface of the anti-rotation flange 36. The case-engaging protrusions 40 project from the anti-rotation flange 36 in an opposite direction as the spindle 32. The spring-engaging flange 34 includes a plurality of blade stops 29. The blade stops 29 project from the spring engaging flange 34 opposite the spindle 32. The blade stops 29 are spaced about the hollow core 31. The spring-engaging flange 34 includes a plurality of blade pockets 28. The blade pockets 28 are formed between the blade stops 29. The blade pockets 28 are the surface of the spring- engaging flange 34 free of having the blade stops 29 projecting therefrom.

FIG. 9A illustrates an exterior of a casing 42 and FIG. 9B illustrates an interior of the casing 42. The casing 42 includes a bobbin retaining well 43. The bobbin retaining well 43 includes an inner cylindrical wall 44 and an outer cylindrical wall 45. The bobbin retaining well 43 includes an end wall 46 connecting the inner cylindrical wall 44 to the outer cylindrical wall 45. Projecting from the outer cylindrical wall 45 is a flange 54. The flange 54 projects generally orthogonally away from the cylindrical wall 45. The flange 54 includes a notch 60. The notch 60 includes notch side walls 62. Projecting inward from the end wall 46 through the bobbin retaining well 43 is a hub 48. The hub 48 is formed by the inner cylindrical wall 44 and a pawl-facing wall 50. The hub 48 is concentric with the cylindrical wall 45. The space between the hub 48 and the cylindrical wall 45 is a bobbin recess 52. The bobbin recess 52 has a substantially annular shape. The pawl-facing wall 50 is substantially coplanar with the flange 54. The pawl-facing wall 50 includes a boss opening 51. The boss opening 51 is concentric with the hub 48 and the cylindrical wall 45. Located on the pawl-facing wall 50, about the boss opening 51, is a plurality of pawl slots 58. Located on the end wall 46, about the hub 48, is a plurality of bobbin slots 56. Further located on the end wall 46, between bobbin slots 56, is a coil opening 64. The coil opening 64 has suitable diameter to facilitate pass through of a pigtail 66 (not shown).

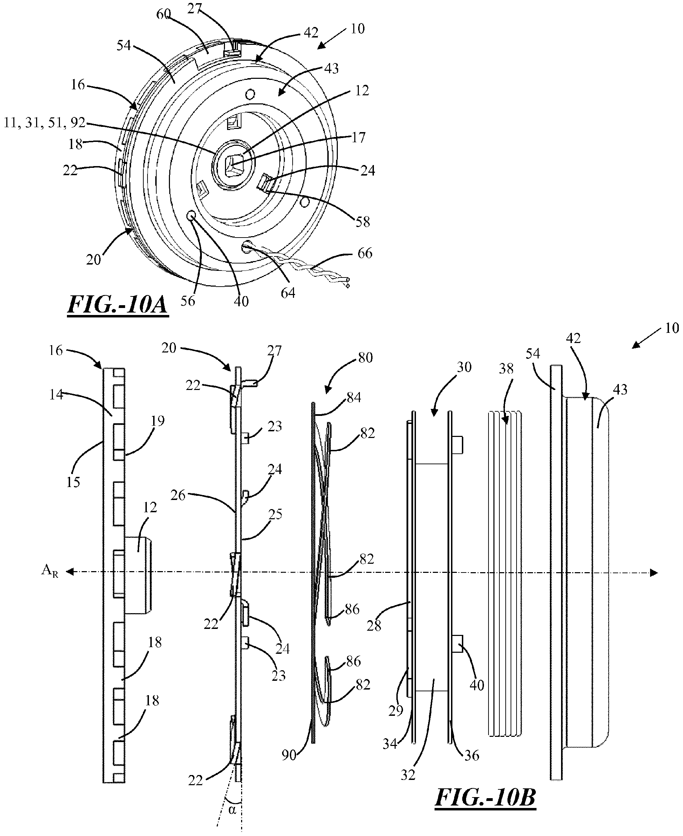

FIG. 10A is a perspective view of an assembled motor brake 10 and FIG. 10B is an exploded view of the motor brake 10. The motor brake 10 includes a toothed wheel 16. A planar face 15 of the toothed wheel faces a motor 108 (not shown) when the motor brake 10 is engaged with a motor gear unit 100 (not shown). A boss 12 projects from a toothed face 19, opposite from the planar face 15. A shaft receiving opening 17 passes through the boss 12 and is able to receive and be rotatably engaged with a motor brake shaft 114 (not shown). The boss 12 and shaft receiving opening 17 are co-axial or centered about a rotational axis A_{R}. A plurality of surface teeth 18 project from the toothed face 19 of the toothed wheel 16 toward a pawl 20. The toothed face 19 of the toothed wheel 16 faces toward the pawl 20. The pawl 20 is co-axial with the toothed wheel 16. A plurality of angled teeth 22 project away from a spring-facing surface 25 past a wheel-facing surface 26 of the pawl 20. The angled teeth 22 are at an angle α relative to the spring-facing surface 25. The wheel-facing surface 26 of the pawl 20 faces toward the toothed wheel 16. The angled teeth 22 angle toward the toothed wheel 16 and the plurality of surface teeth 18. The angled teeth 22 are able to engage with the plurality of surface teeth 18. Projecting from the spring-facing surface 25 is a plurality of case-engaging projections 24. The case-engaging projections 24 are able to be received within pawl slots 58 of a casing 42. A tang 27 projects from the spring-facing surface 25 generally parallel with the rotational axis A_{R} and toward the casing 42. The tang 27 sits within a notch 60 in the bobbin 30. A plurality of spring-engaging projections 23 protrude from the spring-facing surface 25. The spring-engaging projections 23 project generally parallel to the rotational axis A_{R}. The spring-engaging projections 23 are able to reside within pawl slots 88 of a spring washer 80. A pawl-facing surface 90 of the spring washer 80 faces toward the pawl 20. Projecting from a bobbin-facing surface 84 is a plurality of spring blades 82. Each of the spring blades 82 is able to reside within a blade pocket of a bobbin 30. The blade ends 86 are able to abut with the blade stops 29 of the bobbin 30 when the spring washer 80 is rotated in one direction, such that the blade stops 29 prevent further rotational movement of the spring washer 80. In an opposing rotational direction, the blade stops 29 do not block movement of the spring blades 82 and thus do not prevent rotation of the spring washer. The bobbin 30 is co-axial with the pawl 20. The bobbin 30 includes a spindle 32. The spindle 32 receives a coil 38. The coil 38 wraps about an exterior of the spindle 32. The coil 38 is in electrical communication with or includes a pigtail 66. The pigtail 66 passes through a coil opening 64 in the casing 42 so that the pigtail 66 may be electrically connected to a power source (not shown). The spindle 32 has flanges 34, 36 at opposing ends. The flanges 34, 36 include a spring engaging flange 34 and an anti-rotation flange 36. The spring engaging flange 34 includes the plurality of blade pockets 28 and blade stops 29. The blade stops 29 project from a surface of the spring engaging flange 34 toward the spring washer 80, pawl 20 and/or toothed wheel 16. The anti-rotation flange 36 includes a plurality of case-engaging protrusions 40. The case-engaging protrusions 40 project from the anti-rotation flange 36 away from the pawl 20 and and/or toward a casing 42. The case-engaging protrusions 40 are able to reside within a plurality of bobbin slots 56 of the casing 42. The bobbin slots 56 prevent rotational movement of the case-engaging protrusions 40 when located within the bobbin slots 56, thus preventing the bobbin 30 from rotating relative to the casing 42. The casing 42 is co-axial with the bobbin 30 and the rotational axis A_{R}. The casing 42 includes a bobbin retaining well 43. The bobbin 30 is able to reside within the bobbin retaining well 43. Projecting from the bobbin retaining well 43 is a flange 54. The flange 54 includes the notch 60 formed therein. The casing 42 and pawl 20 include boss openings 11, 51 passing through their respective centers. The bobbin 30 includes a hollow core 31. The boss 12 of the toothed wheel 16 is passes through the boss openings 11, 51 and hollow core 31 while being free of direct contact with the pawl 20, the bobbin 30, and the casing 42.

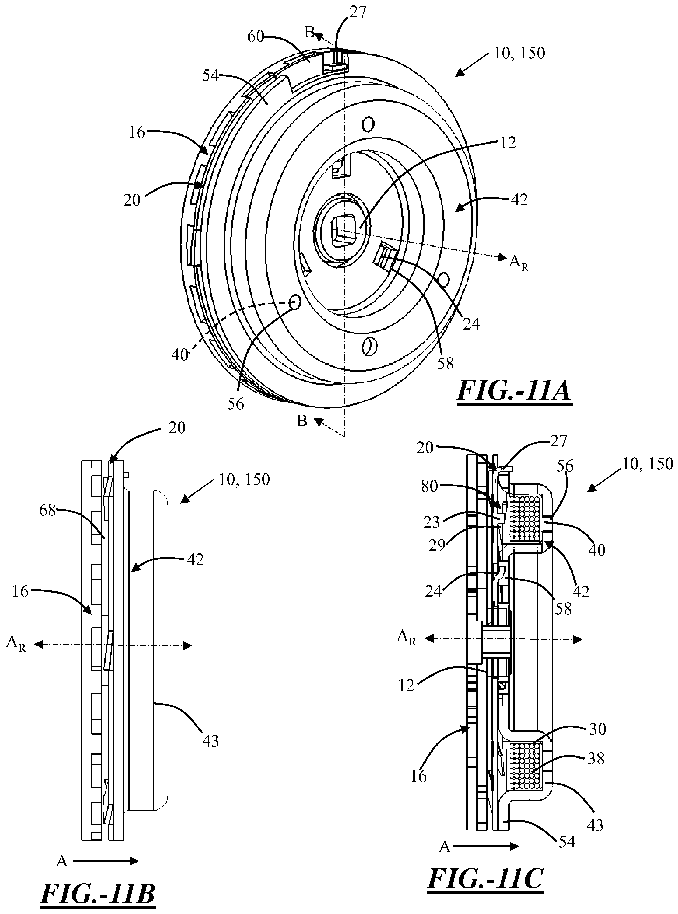

FIGS. 11A-11C illustrate a motor brake 10 in a disengaged position 150. In the disengaged position 150, a casing 42 is restrained from rotating about a rotational axis A_{R}. The casing 42 may be restrained by a housing unit 120 (not shown). The casing 42 includes a bobbin retaining well 43. Located within the bobbin retaining well 43 is a bobbin 30 having a coil 38 wrapped about it. The bobbin 30 and the coil 38 together form an electromagnet. In the disengaged position 150, electrical power is transmitted to the motor brake 10 so that the coil 38 receives an electrical current. The electrical current creates a magnetic field so that the casing 42 forms a magnetic core. Due to the magnetic field, a pawl 20 is attracted to the casing 42. The pawl 20 moves in the direction indicated by arrow A, so that a disengaged gap 68 is formed between the toothed wheel 16 and the pawl 20. The pawl 20 is engaged with the spring washer 80 via the spring-engaging projections 23 residing within the pawl slots 88. The magnetic force which draws the pawl 20 toward the bobbin 30 is stronger than the spring force of the spring washer 80. In moving toward the bobbin 30, the pawl 20 compresses the spring washer 80. Due to the disengaged gap 68, the toothed wheel 16 is free of any contact with the pawl 20. The toothed wheel 16 is free to rotate about the rotational axis A_{R}. The case-engaging projections 24 of the pawl 20 reside within the pawl slots 58 of the casing 42. The pawl 20 is restricted from rotating about the rotational axis A_{R} when the case-engaging projections 24 are seated within the pawl slots 58. The pawl 20 is further engaged with the casing 42 via a tang 27. The tang 27 rests within the notch 60 of the flange 54. The bobbin 30 further engages with the casing 42 by having the case-engaging protrusions 40 inserted through bobbin slots 56. The bobbin slots 56 prevent rotational movement of the case-engaging protrusions 40 when located within the bobbin slots 56, thus preventing the bobbin 30 from rotating relative to the casing 42. Although the pawl 20, spring washer 80, bobbin 30, and casing 42 are restrained from rotating in the disengaged position 150, the toothed wheel 16 is free to rotate when receiving a torque, such as from a drive shaft 110 (not shown). The boss 12 passes through and is free of contact with the pawl 20, spring washer 80, bobbin 30, and casing 42. As the boss 12 rotates with the toothed wheel 16 about the rotational axis A_{R}, there is no friction force or drag applied to the boss 12 via a surface of the pawl 20, spring washer 80, bobbin 30, or casing 42. In the disengaged position 150, the toothed wheel 16 is able to be driven by the motor 108 (not shown) in both a first direction D₁ (not shown) and an opposing second direction D₂ (not shown).

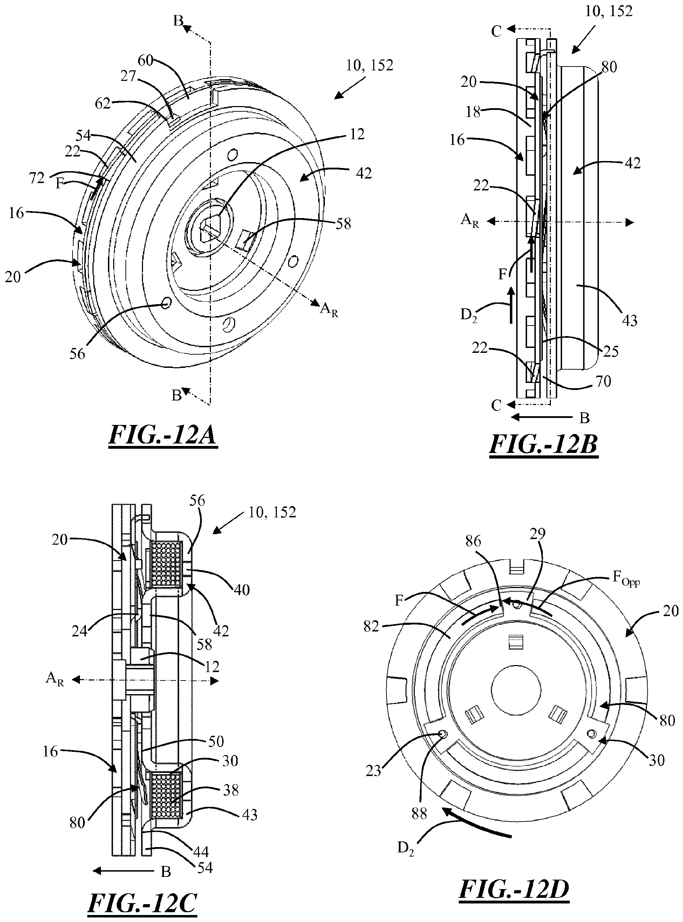

FIGS. 12A-12D illustrate the motor brake 10 in an engaged position 152. In the engaged position 152, a casing 42 may be restrained from rotating about a rotational axis A_{R}. The casing 42 may be restrained by a housing unit 120 (not shown). The casing 42 includes a bobbin retaining well 43. Located within the bobbin retaining well 43 is a bobbin 30 having a coil 38 wrapped about it. The casing 42, bobbin 30, and the coil 38 together form an electromagnet. In the engaged position 152, electrical power is not transmitted to the motor brake 10, so there is no electrical current received by the coil 38. Without an electrical current, the bobbin 30 and coil 38 do not generate a magnetic field. Without a magnetic field, there is no magnetic force to attract the pawl 20 toward the casing 42. Without a magnetic force to draw the pawl 20 toward the casing 42 and overcome a spring force to compress the spring washer 80, the spring washer 80 exerts a force on the pawl 20 tending to urge (e.g., push) it toward the toothed wheel 16. The pawl 20 is engaged with the spring washer 80 via the spring engaging projections 23 residing within the pawl slots 88. The pawl 20 is forced away from the casing 42 toward a toothed wheel 16 in the direction shown by arrow B. This position is the natural deflected state or monostable position of the pawl 20. The case-engaging projections 24 are withdrawn from the pawl slots 58. The spring-facing surface 25 is distanced from the casing 42. The distance from the spring-facing surface 25 to the pawl-facing wall 50, and/or flange 54 is an engaged gap 70. A tang 27 resides within the notch 60 in the flange 54. In the engaged position 152, the angled teeth 22 of the pawl 20 engage with the plurality of surface teeth 18 of the toothed wheel 16. As the angled teeth 22 are engaged with the surface teeth 18, the pawl 20 is rotationally engaged with the toothed wheel 16.

In the engaged position 152, a motor 108 (not shown) does not apply a torque in either a first direction D₁ (not shown) or an opposing second direction D₂ to a drive shaft 110 (not shown). For example, the motor 108 (not shown) may be powered off after applying a torque in a first direction D₁ to apply the brake. A reaction torque is received by the drive shaft 110 (not shown). The reaction torque rotates the drive shaft 110 (not shown) in a second direction D₂, without the motor 108 (not shown) applying torque to the drive shaft 110 (not shown). The reaction torque causes rotation of the toothed wheel 16 so the surface teeth 18 apply a rotational force (i.e., torque) F to the angled teeth 22 at a point of contact 72. This rotational force F causes the pawl 20 to rotate with the toothed wheel 16. The pawl 20 transfers the torque to the spring washer 80 via the spring engaging projections 23 which reside within the pawl slots 88. The spring washer 80 rotates in the second direction D₂ until blade ends 86 abut with the blade stops 29 of the bobbin 30. The blade stops 29 apply an opposing force F_{Opp} to the rotational force F. The opposing force F_{Opp} restrains the pawl 20 from further rotating with the toothed wheel 16. The restrained pawl 20 prevents further rotation of the toothed wheel 16. As the toothed wheel 16 is rotationally engaged with the drive shaft 110 (not shown), the restrained toothed wheel 16 prevents further rotation of the drive shaft 110 (not shown) resulting from the reaction torque.

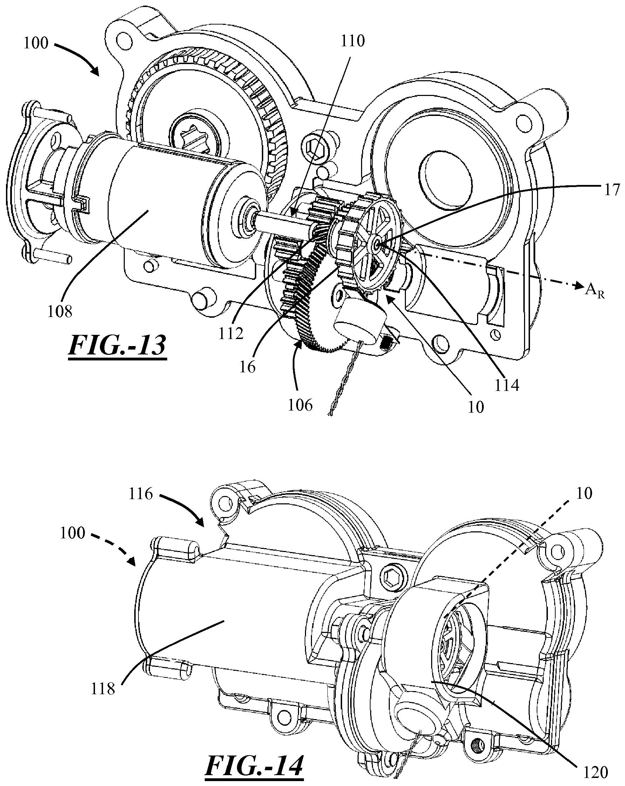

FIG. 13 illustrates a motor brake 10 in communication with a motor unit 100. The motor unit 100 includes a motor 108. The motor 108 drives a drive shaft 110. The drive shaft 110 includes a helical gear 112 and motor brake shaft 114. The motor brake shaft 114 is rotationally engaged with and received within a shaft receiving opening 17 of a toothed wheel 16. The toothed wheel 16 is co-axial with the drive shaft 110. The toothed wheel 16 is also part of the motor brake 10.

FIG. 14 illustrates a housing unit 116. The housing unit 116 is able to be affixed to a caliper 202, as shown in the brake assembly 200 in FIG. 1. The housing unit 116 includes a motor gear housing unit 118. The motor gear housing unit 118 houses the motor gear unit 100. The housing unit 116 includes a motor brake housing unit 120. The motor brake housing unit 120 houses the motor brake 10. The motor brake housing unit 120 encloses an electromagnet (not shown).

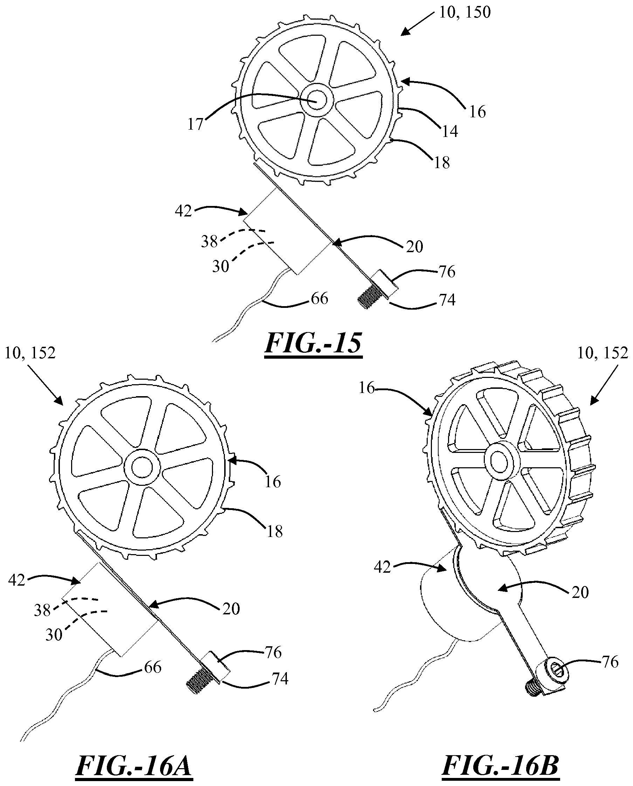

FIG. 15 illustrates the motor brake 10 in a disengaged position 150. The motor brake 10 includes a toothed wheel 16. The toothed wheel 16 includes a shaft receiving opening 17. The shaft receiving opening 17 is centrally located in the toothed wheel 16. The toothed wheel 16 includes a plurality of surface teeth 18 located about and projecting from a perimeter surface 14. The motor brake 10 includes a pawl 20. In the disengaged position 150, the pawl 20 is free of contact with the toothed wheel 16. The pawl 20 may be mounted to a stationary surface at a hinged end 74. The stationary surface may include a surface of the housing 116 (not shown). The pawl 20 may be attached to a stationary surface via a fastener 76. The motor brake 10 includes a casing 42, retaining a bobbin 30 (not shown) and coil 38 (not shown). The bobbin 30 and coil 38 together form an electromagnet. A pigtail 66 is in electrical communication with the coil 38. In the disengaged position 150, the pigtail 66 receives an electrical current from a power source (not shown) which is transmitted to the coil 38. The electrical current creates a magnetic field so that the bobbin 30 forms a magnetic core. Due to the magnetic field, the pawl 20 is attracted to the bobbin 30 and coil 38 and deflects away from contact with the toothed wheel 16. As the pawl 20 is free of contact with the toothed wheel 16, the toothed wheel is free to rotate when driven by a drive shaft 110 (not shown).

FIG. 16A and 16B illustrates the motor brake 10 in an engaged position 152. The motor brake 10 includes a casing 42, retaining a bobbin 30 (not shown) and coil 38 (not shown). The bobbin 30 and coil 38 together form an electromagnet. A pigtail 66 is in electrical communication with the coil 38. In the engaged position 152, the pigtail 66 does not receive an electrical current from a power source (not shown), thus the coil 38 is free of receiving an electrical current. When the coil 38 does not receive an electrical current, there is no magnetic field created and the bobbin 30 does not act as a magnetic core. As no magnetic field is present, the pawl 20 is not attracted to the bobbin 30. The pawl 20 deflects into a monostable position, in which the pawl 20 is in contact with a tooth 18 of the toothed wheel 16. The contact between the pawl 20 and the tooth 18 prevents the toothed wheel 16 from rotating further toward the pawl 20.

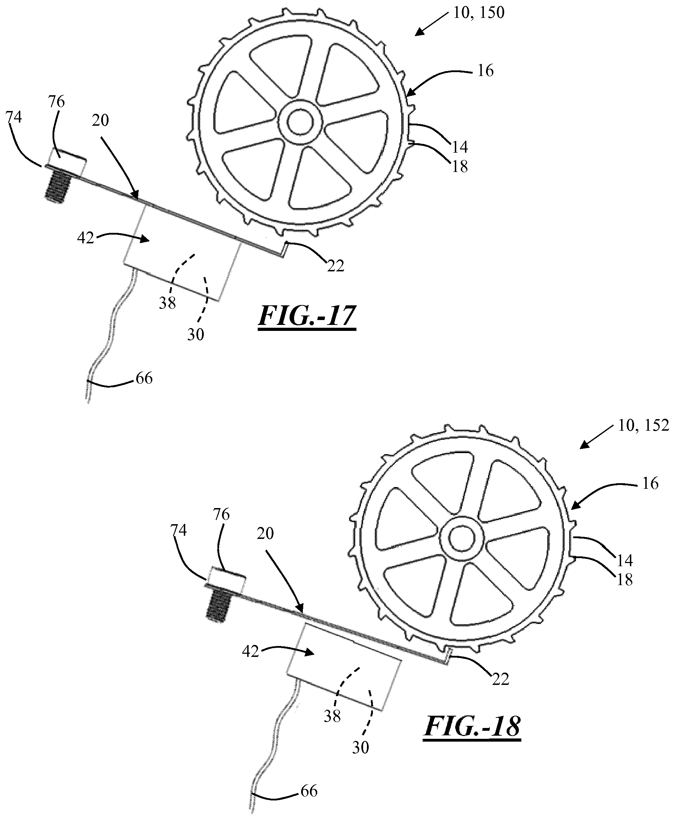

FIG. 17 and FIG. 18 show a pawl 20 having a tooth 22'. The tooth 22' is located opposite a hinged end 74. The tooth 22' projects toward a toothed wheel 16. In the disengaged position 150, the pawl 20 is free of contact with the toothed wheel 16 so that the toothed wheel 16 is free to rotate. In the engaged position 152, the pawl 20 is in contact with the toothed wheel 16 via the tooth 22'. The tooth 22' engages with the surface teeth 18 of the toothed wheel 16. The contact between the tooth 22' of the pawl 20 and the surface teeth 18 prevents the toothed wheel 16 from rotating further.

As used herein, unless otherwise stated, the teachings envision that any member of a genus (list) may be excluded from the genus; and/or any member of a Markush grouping may be excluded from the grouping.

Unless otherwise stated, any numerical values recited herein include all values from the lower value to the upper value in increments of one unit provided that there is a separation of at least 2 units between any lower value and any higher value. As an example, if it is stated that the amount of a component, a property, or a value of a process variable such as, for example, temperature, pressure, time and the like is, for example, from 1 to 90, preferably from 20 to 80, more preferably from 30 to 70, it is intended that intermediate range values such as (for example, 15 to 85, 22 to 68, 43 to 51, 30 to 32 etc.) are within the teachings of this specification. Likewise, individual intermediate values are also within the present teachings. For values which are less than one, one unit is considered to be 0.0001, 0.001, 0.01, or 0.1 as appropriate. These are only examples of what is specifically intended and all possible combinations of numerical values between the lowest value and the highest value enumerated are to be considered to be expressly stated in this application in a similar manner. As can be seen, the teaching of amounts expressed as "parts by weight" herein also contemplates the same ranges expressed in terms of percent by weight. Thus, an expression in the of a range in terms of "at least 'x' parts by weight of the resulting composition" also contemplates a teaching of ranges of same recited amount of "x" in percent by weight of the resulting composition." Unless otherwise stated, all ranges include both endpoints and all numbers between the endpoints. The use of "about" or "approximately" in connection with a range applies to both ends of the range. Thus, "about 20 to 30" is intended to cover "about 20 to about 30", inclusive of at least the specified endpoints.

The disclosures of all articles and references, including patent applications and publications, are incorporated by reference for aid purposes. The term "consisting essentially of' to describe a combination shall include the elements, ingredients, components or steps identified, and such other elements ingredients, components or steps that do not materially affect the basic and novel characteristics of the combination. The use of the terms "comprising" or "including" to describe combinations of elements, ingredients, components or steps herein also contemplates embodiments that consist of, or consist essentially of the elements, ingredients, components or steps. Plural elements, ingredients, components or steps can be provided by a single integrated element, ingredient, component or step. Alternatively, a single integrated element, ingredient, component or step might be divided into separate plural elements, ingredients, components or steps. The disclosure of "a" or "one" to describe an element, ingredient, component or step is not intended to foreclose additional elements, ingredients, components or steps.

It is understood that the above description is intended to be illustrative and not restrictive. Many embodiments as well as many applications besides the examples provided will be apparent to those of skill in the art upon reading the above description. The scope of the disclosure should, therefore, be determined not with reference to the above description, but should instead be determined with reference to the appended claims, along with the full scope of equivalents to which such claims are entitled. The disclosures of all articles and references, including patent applications and publications, are incorporated by reference for all purposes. The omission in the following claims of any aspect of subject matter that is disclosed herein is not a disclaimer of such subject matter, nor should it be regarded that the inventors did not consider such subject matter to be part of the disclosed inventive subject matter.

## Claims

1. A brake assembly comprising:
a) a motor;
b) a reduction gear system having one or more stages in communication with the motor;
c) a motor brake having:
(i) a toothed wheel in rotational communication with the motor;
(ii) an electromagnet;
(iii) a pawl;
(iv) a biasing means;
d) a rotary to linear actuator in communication with the reduction gear system that drives one or more brake pads;
wherein the pawl is monostable, so that the pawl is engaged with the toothed wheel when the motor brake is in an engaged position to prevent rotation of the toothed wheel and the motor when the electromagnet is not energized, and when the motor brake is in a disengaged position, the pawl moves away from the toothed wheel when the electromagnet is energized so the toothed wheel may rotate freely with the motor; and
wherein the biasing means urges the pawl into engagement with the toothed wheel so that the motor brake is positioned from the disengaged position to engaged position.

2. The brake assembly of claim 1, wherein the pawl includes one or more teeth projecting toward the toothed wheel; and
wherein in the engaged position the one or more teeth engage with one or more surface teeth of the toothed wheel to prevent rotation of the toothed wheel.

3. The brake assembly of claims 1 or 2, wherein the electromagnet includes a bobbin wrapped with a coil and the bobbin is disposed within a casing.

4. The brake assembly of claim 3, wherein the casing is grounded relative to the brake assembly.

5. The brake assembly of any of claims 1 to 4, wherein the motor is in rotational communication with a drive shaft so that the motor drives the drive shaft in one or more driving directions; and
wherein the motor brake prevents back drive of the drive shaft when the motor does not generate torque in the one or more driving directions.

6. The brake assembly of any of claims 1 to 5, wherein the toothed wheel is in rotational communication with the drive shaft so that the drive shaft drives the toothed wheel in the one or more driving directions; and
the toothed wheel is coaxial with a rotational axis of the drive shaft.

7. The brake assembly of any of claims 1 to 6, wherein the pawl is an axial pawl which is co-axial with the toothed wheel.

8. The brake assembly of any of claims 1 to 7, wherein the toothed wheel is a face gear having the one or more surface teeth projecting toward the pawl and the pawl includes the one or more teeth projecting toward the toothed wheel; and
wherein the one or more teeth engage with the one or more surface teeth when the pawl is in the engaged position so that the toothed wheel is rotationally engaged with the pawl.

9. The brake assembly of any of claims 1 to 8, wherein the toothed wheel, the pawl, the bobbin, and the casing are co-axial with a rotational axis of the drive shaft.

10. The brake assembly of any of claims 1 to 9, wherein the toothed wheel includes a boss rotatably engaged with the drive shaft; and
the pawl, the bobbin, and the casing each include a central opening through which the drive shaft, the boss, or both are able to pass through while remaining free of contact with the pawl, the bobbin, and the casing.

11. The brake assembly of any of claims 1 to 10, wherein a casing includes one or more pawl slots and the pawl includes one or more projections; and
wherein when the pawl is in the disengaged position, the one or more projections reside within the one or more pawl slots so that the pawl is restricted from rotating relative to the casing.

12. The brake assembly of any of claims 1 to 11, wherein a casing includes one or more bobbin slots and the bobbin includes one or more protrusions; and
wherein the one or more protrusions of the bobbin reside within the one or more bobbin slots so that the bobbin is restricted from rotating relative to the casing.

13. The brake assembly of any of claims 1 to 12, wherein the biasing means includes a spring washer having one or more spring blades which is located between the pawl and the bobbin and the pawl is in rotational communication with the spring washer; and
wherein when the electromagnet is not energized, rotation of the toothed wheel transfers a tangential force from the one or more surface teeth to the one or more teeth so that the pawl and spring washer rotate with the toothed wheel, and the one or more spring blades come into direct contact with one or more blade stops of the bobbin which apply an opposing radial force and prevent further rotation of the spring washer, the pawl, and the toothed wheel.

14. The brake assembly of claim 13, wherein when the electromagnet is not energized, the spring washer urges the pawl into the engaged position with the toothed wheel.

15. The brake assembly of either claim 13 or 14, wherein when the electromagnet is energized, the pawl compresses the spring washer between the pawl and the bobbin so that the pawl is in the disengaged position.
